# EUROPÄISCHE PATENTANMELDUNG

(11) **EP 3 366 654 A1**
(43) Veröffentlichungstag der Anmeldung: **29.08.2018**
(21) Anmeldenummer: 17180541.9
(22) Anmeldetag: 10.07.2017
(51) Int. Cl.: C02F 9/00, A23K 10/30, A23K 50/80, A01K 61/85, A01K 63/04, C02F 1/00, C02F 1/28, C02F 1/32, C02F 1/66, C02F 101/34, C02F 103/02, C02F 1/02

(54) **WASSERAUFBEREITUNGSANLAGE ZUR VERKAUFSVORBEREITUNG VON WASSERORGANISMEN**

(30) Priorität: 22.02.2017 RU 2017105868
(71) Anmelder: Kitashin, Jurii, 140003 Lubertsy (RU); Dubrovin, Evgeny, 123056 Moskau (RU); Yakushev, Dmitry, 125222 Moskau (RU); Kitashin, Oleg, 140003 Lubertsy (RU); Dubrovin, Dmitry, 121614 Moskau (RU)
(72) Erfinder: Kitashin, Jurii, 140003 Lubertsy (RU); Dubrovin, Evgeny, 123056 Moskau (RU); Yakushev, Dmitry, 125222 Moskau (RU); Kitashin, Oleg, 140003 Lubertsy (RU); Dubrovin, Dmitry, 121614 Moskau (RU)
(74) Vertreter: Jeck, Anton

(57) **Zusammenfassung**

Die Vorrichtung enthält folgende Baueinheiten, die miteinander verbunden sind: einen Waschwassertank, eine NaCl-Konzentrations-Regeleinheit im Wasser, eine Wasser-pH-Konzentrations-Regeleinheit, einen ersten Luftverdichter, eine Sedimentversetzungseinheit, eine Sedimentabführungseinheit, einen ersten Verschluss, einen zweiten Verschluss, einen dritten Verschluss, einen vierten Verschluss, einen fünften Verschluss, einen zeolithischen Filter, einen Tank mit Wasserorganismen, die zur Verkaufsvorbereitung vorgesehen sind, eine erste Pumpe, einen sechsten Verschluss, einen siebenten Verschluss, einen zweiten Luftverdichter, einen Boiler, eine UV-Bestrahlungseinheit, eine Frischwasserzugabe-Einheit, eine zweite Pumpe, einen Aktivkohlefilter und eine Konzentrationsmesseinheit für organische Substanzen.

Darüber hinaus ist die Vorrichtung mit Rechnern versehen. Auf den Rechnern ist eine Software "Steuerprogramm zur Wasseraufbereitung im Laufe der Verkaufsvorbereitung von Wasserorganismen" für PCs installiert. Diese Rechner sind datenschalttechnisch mit den genannten Baueinheiten mittels der oben genannten Software für Rechner verbunden. Das ermöglicht es, den Prozess der Entfernung von Geosmin und 2-Methylisoborneol aus den Körpern der für den Verkauf vorzubereitenden Wasserorganismen schnell zu steuern.

## Beschreibung

Die Erfindung bezieht sich auf Wasserkulturen und kann zur Wasseraufbereitung bei der Verkaufsvorbereitung von Wasserorganismen eingesetzt werden, die in geschlossenen Kreislaufanlagen gezüchtet werden.

Aus dem Stand der Technik ist eine Vorrichtung zur Verkaufsvorbereitung von lebenden Fischen (www.foodset.ru/annonce) bekannt. Dabei handelt es sich um einen Behälter mit einem Gehäuse aus schlagfestem Glasfaserkunststoff mit einem Inhalt von 750 Litern. Der Behälter ist mit einem Abflusshahn, einer automatischen Überlaufvorrichtung, einem umlaufend im Behälter verteilten Wasserbelüfter, einem Wasserfüllsystem, einem Verteiler, einem System von rückgeführtem gereinigten Wasser, einem Luftverdichter, einer Filterstation und einer UV-Sterilisationsanlage versehen.

Der Mangel dieser bekannten Vorrichtung ist die lange Zeit (über einen Monat), bis organoleptisch annehmbare Konzentrationen von Geosmin und 2-Methylisoborneol erreicht werden. Diese Stoffe werden durch die in den geschlossenen Kreislaufanlagen gezüchteten Fische in das Wasser des Behälters abgesondert.

Der gegenüber der beanspruchten Anlage nächstliegende Stand der Technik seinem technischen Wesen und dem erreichbaren Effekt nach ist die Vorrichtung nach dem Patent RU 2304881, IPC 01K 63/04, veröffentlicht am 27.08.2007, Informationsblatt Nr. 24. Diese Vorrichtung gilt als Prototyp. Beim Prototyp handelt es sich um einen 136 Liter großen Fischtank mit einem biologischen Filter, der mit einer Umlaufpumpe vereinigt ist, einem Durchlaufkühler, um die Solltemperatur aufrechtzuerhalten, und einem Fischtankbelüftungssystem.

Der Mangel des Prototyps ist eine relativ lange Zeit der Verkaufsvorbereitung der Wasserorganismen, die bis zu einem Monat in Anspruch nehmen kann. Das ist hauptsächlich durch die Dynamik der Einstellzeit der bekannten Vorrichtung bedingt.

Die durch die hier offenbarte technische Lösung zu lösende Aufgabe ist die Gestaltung der industriellen Produktion von Wasserorganismen, die in geschlossenen Kreislaufanlagen gezüchtet sind. Diese Wasserorganismen gelten als Handelsware mit verbesserten organoleptischen Eigenschaften (fehlender erdiger und schimmliger Geschmack, der durch Geosmin und 2-Methylisoborneol bedingt ist). Eine weitere Aufgabe ist die Verminderung der Umweltgefährdung beim Betrieb der geschlossenen Kreislaufanlagen, die für die Züchtung von Wasserorganismen vorgesehen sind.

Der erwartete technische Effekt der Anwendung der Anlage gemäß der Erfindung ist die Zeitverkürzung der Verkaufsvorbereitung der Wasserorganismen.

Der technische Effekt gemäß der Erfindung wird wie folgt erreicht. Die Wasseraufbereitungsanlage zur Verkaufsvorbereitung von Wasserorganismen enthält:
- einen Waschwassertank 1, der mit einem ersten, einem zweiten, einem dritten und einem vierten Eingang, mit einem ersten, einem zweiten, einem dritten, einem vierten und einem fünften Ausgang, einem Daten-Schalteingang und einem Daten-Schaltausgang versehen ist,
- einen Rechner 2, der mit einem ersten, einem zweiten, einem dritten, einem vierten und einem fünften Daten-Schalteingang und einem ersten, einem zweiten, einem dritten, einem vierten und einem fünften Daten-Schaltausgang versehen ist,
- eine NaCl-Konzentrations-Regeleinheit 3 im Wasser, die mit einem Eingang, einem Ausgang, einem Daten-Schalteingang und einem Daten-Schaltausgang versehen ist,
- eine Wasser-pH-Konzentrations-Regeleinheit 4, die mit einem Eingang, einem Ausgang, einem Daten-Schalteingang und einem Daten-Schaltausgang versehen ist,
- einen ersten Luftverdichter 5, der mit einem Ausgang und einem Daten-Schalteingang versehen ist,
- eine Sedimentversetzungseinheit 6, die mit einem Eingang, einem Ausgang und einem Daten-Schalteingang versehen ist,
- eine Sedimentabführungseinheit 7, die mit einem ersten, einem zweiten, einem dritten und einem vierten Eingang versehen ist,
- einen ersten Verschluss 8, der mit einem Eingang, einem Ausgang und einem Daten-Schalteingang versehen ist,
- einen zweiten Verschluss 9, der mit einem Eingang, einem Ausgang und einem Daten-Schalteingang versehen ist,
- einen dritten Verschluss 10, der mit einem Eingang, einem Ausgang und einem Daten-Schalteingang versehen ist,
- einen vierten Verschluss 11, der mit einem Eingang, einem Ausgang und einem Daten-Schalteingang versehen ist,
- einen fünften Verschluss 12, der mit einem Eingang, einem Ausgang und einem Daten-Schalteingang versehen ist,
- einen zeolithischen Filter 13, der mit einem ersten und einem zweiten Eingang, mit einem ersten und einem zweiten Ausgang und einem Daten-Schaltausgang versehen ist,
- einen Tank für Wasserorganismen 14, der mit einem ersten, einem zweiten, einem dritten und einem vierten Eingang, mit einem ersten, einem zweiten, einem dritten und einem vierten Ausgang und einem Daten-Schaltausgang versehen ist,
- eine erste Pumpe 15, die mit einem ersten und einem zweiten Eingang, mit einem ersten und einem zweiten Ausgang und einem Daten-Schalteingang versehen ist,
- einen sechsten Verschluss 16, der mit einem Eingang, einem Ausgang und einem Daten-Schalteingang versehen ist,
- einen zweiten Luftverdichter 18, der mit einem Ausgang und einem Daten-Schalteingang versehen ist,
- einen Boiler 19, der mit einem Eingang, einem Ausgang und einem Daten-Schalteingang versehen ist,
- eine UV-Bestrahlungseinheit 20, die mit einem Eingang, einem Ausgang und einem Daten-Schalteingang versehen ist,
- eine Frischwasserzugabe-Einheit 21, die mit einem Ausgang und einem Daten-Schalteingang versehen ist,
- eine zweite Pumpe 22, die mit einem Eingang, einem Ausgang und einem Daten-Schalteingang versehen ist,
- einen Aktivkohlefilter 23, der mit einem Eingang, einem Ausgang und einem Daten-Schaltausgang versehen ist,
- eine Konzentrationsmesseinheit für organische Substanzen 24, die mit einem Eingang und einem Daten-Schaltausgang versehen ist.

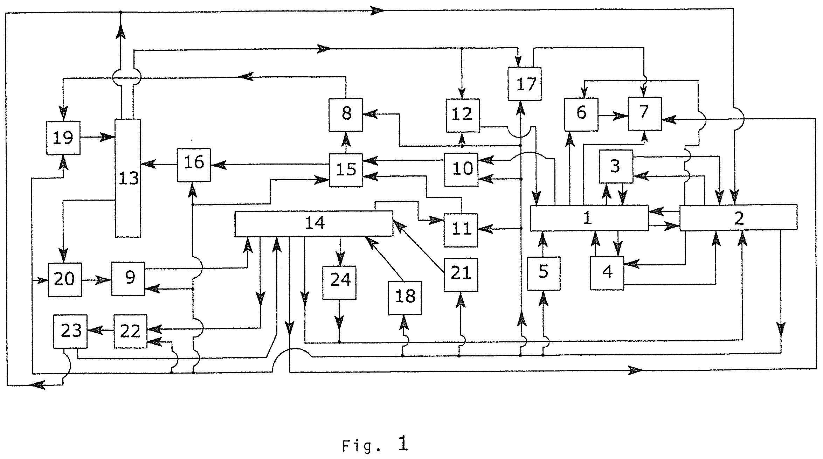

Dabei ist der erste Eingang des Waschwassertanks 1 mit dem Ausgang des ersten Luftverdichters 5 verbunden, der zweite Eingang des Waschwassertanks 1 ist mit dem Ausgang des fünften Verschlusses 12 verbunden, der dritte Eingang des Waschwassertanks 1 ist mit dem Ausgang der NaCl-Konzentrations-Regeleinheit 3 im Wasser verbunden, der vierte Eingang des Waschwassertanks 1 ist mit dem Ausgang der Wasser-pH-Regeleinheit 4 verbunden, der erste Ausgang des Waschwassertanks 1 ist mit dem Eingang der Wasser-pH-Konzentrations-Regeleinheit 4 verbunden, der zweite Ausgang des Waschwassertanks 1 ist mit dem Eingang des ersten Verschlusses 10 verbunden, der dritte Ausgang des Waschwasser-tanks 1 ist mit dem Eingang der Sedimentversetzungseinheit 6 verbunden, der vierte Ausgang des Waschwassertanks 1 ist mit dem ersten Eingang der Sedimentabführungseinheit 7 verbunden, der fünfte Ausgang des Waschwassertanks 1 ist mit dem Eingang der NaCl-Konzentrations-Regeleinheit 3 im Wasser verbunden, der Daten-Schalteingang des Wasch-wassertanks 1 ist mit dem ersten Daten-Schaltausgang des Rechners 2 verbunden, der Daten-Schaltausgang des Waschwassertanks 1 ist mit dem ersten Daten-Schalteingang des Rechners 2 verbunden, der zweite Daten-Schaltausgang des Rechners 2 ist mit dem Daten-Schalteingang der Wasser-pH-Konzentrations-Regeleinheit 4 verbunden, der Daten-Schaltausgang der Wasser-pH-Konzentrations-Regeleinheit 4 ist mit dem zweiten Daten-Schalteingang des Rechners 2 verbunden, der dritte Daten-Schaltausgang des Rechners 2 ist mit dem Daten-Schalteingang der NaCl-Konzentrations-Regeleinheit 3 im Wasser verbunden, der dritte Daten-Schalteingang des Rechners 2 ist mit dem Daten-Schaltausgang der NaCl-Konzentrations-Regeleinheit 3 im Wasser verbunden,
der vierte Daten-Schaltausgang des Rechners 2 ist mit dem Daten-Schalteingang des ersten Luftverdichters 5, dem Daten-Schalteingang des ersten Verschlusses 8, dem Daten-Schalteingang des zweiten Verschlusses 9, dem Daten-Schalteingang des dritten Verschlusses 10, dem Daten-Schalteingang des vierten Verschlusses 11, dem Daten-Schalteingang des fünften Verschlusses 12, dem Daten-Schalteingang des siebenten Verschlusses 17, dem Daten-Schalteingang der Frischwasserzugabe-Einheit 21, dem Daten-Schalteingang des zweiten Luftverdichters 18, dem Daten-Schalteingang der ersten Pumpe 15, dem Daten-Schalteingang des sechsten Verschlusses 16, dem Daten-Schalteingang der zweiten Pumpe 22, dem Daten-Schalteingang der UV-Bestrahlungseinheit 20 und dem Daten-Schalteingang des Boilers 19 verbunden,
der fünfte Daten-Schaltausgang des Rechners 2 ist mit dem Daten-Schalteingang der Sedimentversetzungseinheit 6 verbunden, der Daten-Schaltausgang des Aktivkohlefilters 23 ist mit dem vierten Daten-Schalteingang des Rechners 2 verbunden, der Daten-Schaltausgang des Tanks für Wasserorganismen 14 und der Daten-Schaltausgang der Konzentrationsmesseinheit für organische Substanzen 24 sind mit dem fünften Daten-Schalteingang des Rechners 2 verbunden, der zweite Eingang der Sedimentabführungseinheit 7 ist mit dem ersten Ausgang des Tanks für Wasserorganismen 14 verbunden, der zweite Ausgang des Tanks für Wasserorganismen 14 ist mit dem Eingang des vierten Verschlusses 11 verbunden, der dritte Ausgang des Tanks für Wasserorganismen 14 ist mit der zweiten Pumpe 22 verbunden, der vierte Ausgang des Tanks für Wasserorganismen 14 ist mit dem Eingang der Konzentrationsmesseinheit für organische Substanzen 24 verbunden, der Ausgang des Boilers 19 ist mit dem ersten Eingang des zeolithischen Filters 13 verbunden, der Eingang des Boilers 19 ist mit dem Ausgang des ersten Verschlusses 8 verbunden, der erste Ausgang des zeolithischen Filters 13 ist mit dem Eingang der UV-Bestrahlungseinheit 20 verbunden, der zweite Ausgang des zeolithischen Filters 13 ist mit dem Eingang des fünften Verschlusses 12 und dem Eingang des siebenten Verschlusses 17 verbunden, der Ausgang des siebenten Verschlusses 17 ist mit dem dritten Eingang der Sedimentabführungseinheit 7 verbunden, der Ausgang der Sedimentversetzungseinheit 6 ist mit dem vierten Eingang der Sedimentabführungseinheit 7 verbunden, der Ausgang des sechsten Verschlusses 16 ist mit dem zweiten Eingang des zeolithischen Filters 13 verbunden, der Ausgang der UV-Bestrahlungseinheit 20 ist mit dem Eingang des zweiten Verschlusses 9 verbunden, der Ausgang des zweiten Verschlusses 9 ist mit dem ersten Eingang des Tanks für Wasserorganismen 14 verbunden, der Ausgang der zweiten Pumpe 22 ist mit dem Eingang des Aktivkohlefilters 23 verbunden, der Ausgang des Aktivkohlefilters 23 ist mit dem zweiten Eingang des Tanks für Wasserorganismen 14 verbunden, der Ausgang des zweiten Luftverdichters 18 ist mit dem dritten Eingang des Tanks für Wasserorganismen 14 verbunden, der Ausgang der Frischwasserzugabe-Einheit 21 ist mit dem vierten Eingang des Tanks für Wasserorganismen 14 verbunden, der Ausgang des dritten Verschlusses 10 ist mit dem ersten Eingang der ersten Pumpe 15 verbunden, der Ausgang des vierten Verschlusses 11 ist mit dem zweiten Eingang der ersten Pumpe 15 verbunden, der erste Ausgang der ersten Pumpe 15 ist mit dem Eingang des sechsten Verschlusses 16 verbunden und der zweite Ausgang der ersten Pumpe 15 ist mit dem Eingang des ersten Verschlusses 8 verbunden. Dabei ist auf dem Rechner 2 (Fig. 1) eine Software "Steuerprogramm zur Wasseraufbereitung im Laufe der Vorverkaufsbehandlung von Wasserorganismen" installiert.

Die Erfindung wird nun anhand einer Figur näher erläutert. Fig. 1 zeigt ein Blockschaltbild der Wasseraufbereitungsanlage zur Verkaufsvorbereitung von Wasserorganismen.

Während der Züchtung von Wasserorganismen in geschlossenen Kreislaufanlagen (GKA) werden Nitrifikations- und Denitrifikations-Biofilter bei der Entfernung von Ammoniakstickstoff, Nitriten und Nitraten aus dem Kreislaufrückwasser eingesetzt. Diese Biofilter weisen Nebeneffekte auf: In das Kreislaufrückwasser der genannten GKA werden solche organische Substanzen wie Geosmin, 2-Methylisoborneol, Benzothiazol und Dimethylsulfid ausgeschieden. Solche organische Substanzen verleihen dem Wasser erdige, grablig-schimmlige und schweflige Gerüche. Die dominierenden Beimischungen im Wasser der GKA sind Geosmin und 2-Methylisoborneol. Ihre Konzentration im Wasser erreicht 0,05 - 0,5 µg/l. Diese organischen Substanzen weisen hohe diffuse Gradienten beim Eindringen in die Körper der gezüchteten Wasserorganismen auf. Die höchste Konzentration dieser organischen Substanzen wird im Fettgewebe der Wasserorganismen beobachtet. Hier ist es sehr schwer, diese zu entfernen.

Wenn die Konzentration dieser organischen Substanzen im Wasser 0,006 - 0,01 µg/l erreicht, haben Wasserorganismen solche Beigeschmäcke, die den Appetit auf ihren Verzehr verderben. Die Konzentration von Geosmin und 2-Methylisoborneol im Kreislaufrückwasser kann sehr genau gemessen werden. Es bleibt nun die Frage über einen Schwellenwert offen, bei dem die Wasserorganismen sicher und ohne jegliche Fremd-Beigeschmäcke verzehrt werden können. Die Tabellen 1 und 2 enthalten vergleichende Beurteilungen der Schwellenwerte von Geosmin und 2-Methylisoborneol. Bei diesen Schwellenwerten sind Fremd-Beigeschmäcke im Wasserorganismus nicht spürbar.

**Tabelle 1**

| **Pos.** | **Befragte** | Konzentration Geosmin im Wasser, µg/l | | | | | | |
|---|---|---|---|---|---|---|---|---|
| | | **0,004** | **0,005** | **0,006** | **0,007** | **0,008** | **0,009** | **0,010** |
| 1 | Richter 1 | 5 | 4 | 3 | 3 | 2 | 1 | 1 |
| 2 | Richter 2 | 5 | 5 | 5 | 4 | 2 | 1 | 1 |
| 3 | Richter 3 | 5 | 5 | 4 | 3 | 3 | 2 | 2 |
| 4 | Richter 4 | 5 | 5 | 4 | 4 | 2 | 1 | 1 |
| 5 | Richter 5 | 5 | 5 | 5 | 4 | 3 | 2 | 2 |
| 6 | Richter 6 | 5 | 5 | 4 | 3 | 2 | 2 | 1 |
| 7 | Richter 7 | 5 | 5 | 5 | 4 | 3 | 2 | 1 |
| 8 | **Beigeschmack nicht spürbar** | **100%** | **97%** | **86%** | **71%** | **49%** | **31%** | **26%** |

**Tabelle 2**

| **Pos.** | **Befragte** | Konzentration 2-Methylisoborneol im Wasser, µg/l | | | | | | |
|---|---|---|---|---|---|---|---|---|
| | | **0,004** | **0,005** | **0,006** | **0,007** | **0,008** | **0,009** | **0,010** |
| 1 | Richter 1 | 5 | 5 | 5 | 5 | 4 | 3 | 3 |
| 2 | Richter 2 | 5 | 5 | 5 | 5 | 4 | 4 | 3 |
| 3 | Richter 3 | 5 | 5 | 5 | 5 | 4 | 3 | 3 |
| 4 | Richter 4 | 5 | 5 | 4 | 4 | 4 | 3 | 3 |
| 5 | Richter 5 | 5 | 5 | 5 | 5 | 4 | 3 | 2 |
| 6 | Richter 6 | 5 | 5 | 5 | 4 | 3 | 3 | 2 |
| 7 | Richter 7 | 5 | 5 | 5 | 5 | 4 | 4 | 3 |
| 8 | **Beigeschmack nicht spürbar** | **100%** | **100%** | **97%** | **94%** | **77%** | **66%** | **54%** |

Die Angaben der Richterbewertungen zeigen, dass mit einer Wahrscheinlichkeit von mind. 0,95 keine Fremd-Beigeschmäcke der Wasserorganismen bei einer Geosmin-Konzentration von max. 0,005 µg/l und einer 2-Methylisoborneol-Konzentration von max. 0,006 µg/l im Wasser spürbar sind. Die Entfernung von Fremd-Beigeschmäcken bei Wasserorganismen wird gewöhnlich bei ihrer Verkaufsvorbereitung durchgeführt. Dabei handelt es sich um ein sehr langes Waschen der Wasserorganismen in Tanks, wobei die Wasserorganismen nicht gefüttert werden. Es wird täglich frisches Reinwasser in einer Menge von mind. 40% des Wasserinhalts desTanks zugegeben. Die Tabellen 3 und 4 enthalten im Einzelnen die Waschergebnisse von verschiedenen Störarten bei unterschiedlichen Waschwassertemperaturen.

**Tabelle 3**

| Pos. | Wassertemperatur, °C | Konzentration Geosmin im Wasser, µg/l | | | | | | | |
|---|---|---|---|---|---|---|---|---|---|
| | | 5 Tage | 10 Tage | 15 Tage | 20 Tage | 25 Tage | 35 Tage | 40 Tage | 45 Tage |
| 1 | 26 | 0,034 | 0,028 | 0,021 | 0,012 | 0,009 | 0,006 | 0,004 | 0,002 |
| 2 | 20 | 0,018 | 0,016 | 0,013 | 0,009 | 0,008 | 0,007 | 0,006 | 0,005 |
| 3 | 15 | 0,042 | 0,036 | 0,029 | 0,024 | 0,017 | 0,014 | 0,012 | 0,01 |

**Tabelle 4**

| Pos. | Wassertemperatur, °C | Konzentration 2-Methylisoborneol im Wasser, µg/l | | | | | | | |
|---|---|---|---|---|---|---|---|---|---|
| | | 5 Tage | 10 Tage | 15 Tage | 20 Tage | 25 Tage | 35 Tage | 40 Tage | 45 Tage |
| 1 | 26 | 0,015 | 0,013 | 0,011 | 0,01 | 0,009 | 0,006 | 0,004 | 0,002 |
| 2 | 20 | 0,009 | 0,008 | 0,008 | 0,008 | 0,007 | 0,007 | 0,006 | 0,005 |
| 3 | 15 | 0,019 | 0,017 | 0,016 | 0,015 | 0,014 | 0,012 | 0,011 | 0,009 |

Aus den Angaben der Tabellen 3 und 4 geht Folgendes hervor: Beim 1,8-fachen Abfall der Waschwassertemperatur in Tanks mit Wasserorganismen sinkt die Effizienz der Abscheidung der organischen Substanzen durch Wasserorganismen im Waschwasser um das Vierfache.

Es muss auch eine weitere bei Versuchen festgestellte Tatsache erwähnt werden: Werden mehr als 10 % der ungewaschenen Biomasse von Wasserorganismen in den Waschtank für Wasserorganismen mit praktisch abgeschlossenem Waschprozess eingebracht, so werden alle 100 % der Wasserorganismen für den Verzehr ungenießbar. Das liegt an einer sehr schnellen Steigerung der Geosmin- und 2-Methylisoborneol-Konzentration im Gewebe der Wasserorganismen.

Ebenfalls wurde durch Versuche Folgendes festgestellt: Werden die Wasserorganismen während des Waschvorgangs einem Stress ausgesetzt, indem z. B. die Waschwassertemperatur um 4 - 5° C innerhalb von 24 Stunden erhöht und dann wieder herabgesetzt wird, so beschleunigt sich die Abscheidung von Geosmin und 2-Methylisoborneol aus dem Gewebe von Wasserorganismen.

Für den Fall, dass die Behebung der erhöhten Geosmin- und 2-Methylisoborneol-Konzentrationen aus dem Waschwasser innerhalb dieser Perioden nicht beschleunigt wird, fällt der genannte Effekt infolge von Stress bei den Wasserorganismen mehrfach ab.

Die Tabelle 5 beschreibt ein Beispiel solcher Experimente, wobei die Konzentration von Geosmin und 2-Methylisoborneol überwacht wurde.

**Tabelle 5**

| Pos. | Schrittbezeichnung | Tage des Waschens | | | | | | | |
|---|---|---|---|---|---|---|---|---|---|
| | | 1 | 2 | 3 | 4 | 5 | 10 | 15 | 20 |
| 1 | Waschwassertemperatur, °C | 26 | 26 | 22 | 26 | 26 | 26 | 26 | 0,002 |
| 2 | Frischwasserzugabe | 30% | 30% | 60% | 50% | 40% | 30% | 30% | 30% |
| 3 | Durchströmungsintensität über den Aktivkohlefilter | 25% | 25% | 75% | 50% | 40% | 25% | 25% | 25% |
| 4 | Konzentration Geosmin im Wasser, µg/l | 0,045 | 0,043 | **0,084** | 0,021 | 0,012 | 0,008 | 0,006 | 0,005 |
| 5 | Konzentration 2-Methylisoborneol im Wasser, µg/l | 0,023 | 0,022 | **0,038** | 0,018 | 0,011 | 0,007 | 0,005 | 0,003 |

Die Angaben aus der Tabelle 5 zeigen, dass die dreifache Steigerung der Durchströmungsintensität des Wassers über den Aktivkohlefilter (d. h. der Aktivkohlefilter lässt 75 % des Tankwasserinhalts mit den zu waschenden Wasserorganismen täglich durch) und die 2-fache Vergrößerung des Umfangs der Frischwasserspeisung im Tank (d. h. dem Tank für Wasserorganismen werden 60 % des Tankwasserinhalts mit den zu waschenden Wasserorganismen pro 24 Stunden) während der Zeit, in der Wasserorganismen einem Stress ausgesetzt werden, es ermöglichen, die Waschdauer um mehr als das Zweifache zu verkürzen.

Die Tabelle 6 enthält Angaben darüber, wenn Wasserorganismen einem Stress ausgesetzt wurden, und die Behebung der erhöhten Geosmin- und 2-Methylisoborneol-Konzentrationen im Wasser um diese Zeit unverändert blieb.

**Tabelle 6**

| Pos. | Schrittbezeichnung | Tage des Waschens | | | | | | | |
|---|---|---|---|---|---|---|---|---|---|
| | | 1 | 2 | 3 | 4 | 5 | 10 | 15 | 20 |
| 1 | 2 | *3* | *4* | *5* | *6* | *7* | *8* | *9* | *10* |
| 1 | Waschwassertemperatur, °C | 26 | 26 | 22 | 26 | 26 | 26 | 26 | 0,002 |
| 2 | Frischwasserzugabe | 30% | 30% | 30% | 30% | 30% | 30% | 30% | 30% |
| 3 | Durchströmungsintensität über den Aktivkohlefilter | | 25% | 25% | 25% | 25% | 25% | 25% | 25% |
| 4 | Konzentration Geosmin im Wasser, µg/l | 0,033 | 0,032 | **0,058** | 0,048 | 0,039 | 0,023 | 0,017 | 0,010 |
| 5 | Konzentration 2-Methylisoborneol im Wasser, µg/l L | 0,015 | 0,014 | **0,026** | 0,021 | 0,018 | 0,014 | 0,011 | 0,009 |

Aus den Angaben der Tabelle 6 geht hervor: Wenn die Durchströmungsintensität des Wassers über den Aktivkohlefilter und der Umfang der Frischwasserspeisung im Tank unverändert bleiben, während die Wasserorganismen einem Stress ausgesetzt sind, so verkürzt sich ihre Waschzeit nur um 5 bis 10 %.

Das bestätigt die Tatsache, dass mit der Zeit ein Rückprozess abläuft, wenn die erhöhte Geosmin- und 2-Methylisoborneol-Konzentration nicht ganz schnell beseitigt ist, da diese schädlichen organischen Substanzen zurück ins Gewebe der Wasserorganismen eindringen. Es sei auch bemerkt, dass der zeitliche Verlauf des Waschens bei stabilen Wassertemperaturen beim Waschen der Wasserorganismen sehr mit physiologischen Prozessen korreliert, die in Wasserorganismen ablaufen.

D. h., die Vergrößerung des Umfangs des zugeführten Frischwassers verursacht keine n-fache proportionale Vergrößerung der Anleitung der organischen Substanzen aus dem Gewebe von Wasserorganismen ins Wasser. Die Vermehrung der Stresssituationen für Wasserorganismen während ihres Waschens auf max. einmal ergibt ebenfalls keine wesentliche Beschleunigung des Waschvorgangs der Wasserorganismen.

Die Betriebsvorbereitung der angemeldeten Wasseraufbereitungsanlage zur Verkaufsvorbereitung von Wasserorganismen (Fig. 1) schließt folgende Zusammenstellung an Prozessschritten ein:
Einbringung von
   - NaCl in die NaCl-Konzentrations-Regeleinheit 3 im Wasser (Fig. 1),
   - NaOH in die pH-Konzentrations-Regeleinheit 4 im Wasser (Fig. 1),
   - Aktivkohle in den Aktivkohlefilter 23 (Fig. 1) und
   - Klinoptilolith in den zeolithischen Filter 12 (Fig. 1).

Danach kommt der Rechner 2 (Fig. 1) in den Betrieb der Wasseraufbereitungsanlage zur Verkaufsvorbereitung von Wasserorganismen (Fig. 1) gemäß der Erfindung. Der Rechner 2 (Fig. 1) benutzt folgende Daten, um gewisse Befehle abzugeben:
- über den Druck im zeolithischen Filter 13 (Fig. 1); die Daten kommen vom Ausgang des zeolithischen Filters 13 (Fig. 1) an den vierten Eingang des Rechners 2 (Fig. 1);
- über die Konzentration des Ammoniakstickstoffs im Wasser des Tanks mit Wasserorganismen 14 (Fig. 1); die Daten kommen vom Ausgang des Tanks mit Wasserorganismen 14 (Fig. 1) an den fünften Eingang des Rechners 2 (Fig. 1);
- über die Konzentration der organischen Substanzen im Wasser; die Daten kommen vom Ausgang der Konzentrationsmesseinheit für organische Substanzen 24 (Fig. 1) an den fünften Daten-Schalteingang des Rechners 2 (Fig. 1);
- über den Druck im Aktivkohlefilter 23 (Fig. 1); die Daten kommen vom Daten-Schaltausgang des Aktivkohlefilters 23 (Fig. 1) an den vierten Daten-Schalteingang des Rechners 2 (Fig. 1);
- über die Konzentration des Ammoniakstickstoffs, der NaCl-Konzentration und den pH-Wert im Wasser des Waschwassertanks 1 (Fig. 1); die Daten kommen vom Daten-Schaltausgang des Waschwassertanks 1 (Fig. 1) an den ersten Daten-Schalteingang des Rechners 2 (Fig. 1).

Wenn
- der Druck im zeolithischen Filter 13 (Fig. 1) unter 2,2 bar liegt,
- die Konzentration von Ammoniakstickstoff im Wasser des Tanks mit Wasserorganismen 14 (Fig. 1) unter 0,9 mg/l liegt,
- die Konzentration organischer Substanzen in der Konzentrationsmesseinheit für organische Substanzen 24 (Fig. 1) sich innerhalb einer stündlichen Messungsiteration um nicht mehr als 10 % nach oben verändert,
- das Druckniveau im Aktivkohlefilter 23 (Fig. 1) unter 2,2 bar liegt,
- die Konzentration des Ammoniakstickstoffs im Wasser des Waschwassertanks 1 (Fig. 1) unter 1,2 mg/l liegt,
- die Konzentration von NaCl im Wasser des Waschwassertanks 1 (Fig. 1) über 50 g/l liegt, und
- der pH-Wert im Wasser des Waschwassertanks 1 (Fig. 1) über 11 liegt,
dann gibt der Rechner 2 (Fig. 1) den Befehl für den Normalbetrieb ab. Der Befehl wird gemäß der darauf installierten Software abgegeben (Urkunde über die staatliche Registrierung eines Computerprogramms 2017610669 vom 16. Januar 2017 "Steuerprogramm zur Wasseraufbereitung im Laufe der Verkaufsvorbereitung von Wasserorganismen").

Dabei wird ein Befehl vom vierten Daten-Schaltausgang des Rechners 2 (Fig. 1) an den Daten-Schalteingang des ersten Luftverdichters 5 (Fig. 1) für dessen Normalbetrieb abgegeben. Ein Befehl für die Öffnung des Verschlusses wird vom vierten Ausgang des Rechners 2 (Fig. 1) an den Daten-Schalteingang des vierten Verschlusses 11 (Fig. 1) abgegeben. Ein Befehl wird von demselben Ausgang des Rechners an den Daten-Schalteingang des dritten Verschlusses 10 (Fig. 1) für das Schließen des Verschlusses abgegeben. Ein Befehl wird an den Daten-Schalteingang des fünften Verschlusses 12 (Fig. 1) für dessen Schließen abgegeben. Ein Befehl wird an den Daten-Schalteingang des siebenten Verschlusses 17 (Fig. 1) für dessen Schließen abgegeben. Ein Befehl wird von demselben vierten Daten-Schaltausgang des Rechners 2 (Fig. 1) an den Daten-Schalteingang des sechsten Verschlusses 16 (Fig. 1) für das Schließen des Verschlusses abgegeben. Ein Befehl wird vom vierten Ausgang des Rechners 2 (Fig. 1) an den Daten-Schalteingang des ersten Verschlusses 8 (Fig. 1) für die Öffnung des Verschlusses abgegeben. Ein Befehl wird vom vierten Daten-Schaltausgang des Rechners 2 (Fig. 1) an den Daten-Schalteingang des Boilers 19 (Fig. 1) für dessen Normalbetrieb abgegeben. Ein Befehl wird vom vierten Daten-Schaltausgang des Rechners an den Daten-Schalteingang des zweiten Verschlusses 9 (Fig. 1) für dessen Öffnung abgegeben. Ein Befehl wird vom vierten Daten-Schaltausgang des Rechners 2 (Fig. 1) an den Daten-Schalteingang der ersten Pumpe 15 (Fig. 1) für deren Einschalten abgegeben. Ein Befehl wird vom vierten Daten-Schaltausgang des Rechners 2 (Fig. 1) an den Daten-Schalteingang der zweiten Pumpe 22 (Fig. 1) für deren Normalbetrieb abgegeben. Ein Befehl kommt von demselben Daten-Schaltausgang des Rechners 2 (Fig. 1) an den Daten-Schalteingang der UV-Bestrahlungseinheit 20 (Fig. 1) für deren Einschalten. Ein Befehl kommt vom vierten Daten-Schaltausgang des Rechners an den Daten-Schalteingang des zweiten Luftverdichters 18 (Fig. 1) für dessen Einschalten. Ein Befehl kommt vom vierten Daten-Schaltausgang des Rechners 2 (Fig. 1) an den Daten-Schalteingang der Frischwasserzugabe-Einheit 21 (Fig. 1) für deren Normalbetrieb. Ein Befehl wird vom fünften Daten-Schaltausgang des Rechners 2 (Fig. 1) an den Daten-Schalteingang der Sedimentversetzungseinheit 6 (Fig. 1) für deren Abschalten abgegeben. Ein Befehl wird vom dritten Daten-Schaltausgang des Rechners 2 (Fig. 1) an den Daten-Schalteingang der NaCl-Konzentrations-Regeleinheit 3 im Wasser (Fig. 1) für deren Abschalten abgegeben. Ein Befehl kommt vom zweiten Daten-Schaltausgang des Rechners 2 (Fig. 1) an den Daten-Schalteingang der pH-Konzentrations-Regeleinheit 4 im Wasser (Fig. 1) für deren Abschalten.

Danach funktioniert die Anlage gemäß der Erfindung wie folgt. Das Waschwasser kommt aus dem zweiten Ausgang des Tanks mit Wasserorganismen 14 (Fig. 1) über den offenen Eingang des vierten Verschlusses 11 (Fig. 1) und dann über dessen Ausgang an den zweiten Eingang der ersten Pumpe 15 (Fig. 1). Aus ihrem zweiten Ausgang wird dieses Wasser dem offenen Eingang des ersten Verschlusses 8 (Fig. 1) zugeführt. Danach wird das Waschwasser aus dem Ausgang des ersten Verschlusses 8 (Fig. 1) dem Eingang des Boilers 19 (Fig. 1) zugeführt. Hier wird es bis zur Soll-Temperatur erwärmt. Das erwärmte Waschwasser wird aus dem Ausgang des Boilers 19 (Fig. 1) dem ersten Eingang des zeolithischen Filters 13 (Fig. 1) zugeführt. Danach kommt das ammoniakstickstofffreie Waschwasser vom ersten Ausgang des zeolithischen Filters 13 (Fig. 1) an den Eingang der UV-Bestrahlungseinheit 20 (Fig. 1). Hier wird das Waschwasser desinfiziert. Dieses Wasser wird vom Ausgang der UV-Bestrahlungseinheit 20 (Fig. 1) dem offenen Eingang des zweiten Verschlusses 9 (Fig. 1) zugeführt. Danach kommt das Waschwasser vom Ausgang des zweiten Verschlusses 9 (Fig. 1) an den ersten Eingang des Tanks mit Wasserorganismen 14 (Fig. 1). Ein Teil dieses Wassers wird vom dritten Ausgang des Tanks mit Wasserorganismen 14 (Fig. 1) über den Eingang der zweiten Pumpe 22 (Fig. 1) und dann über deren Ausgang dem Eingang des Aktivkohlefilters 23 (Fig. 1) zugeführt. Nun enthält das Waschwasser keine organischen Beimischungen. Das Reinwasser kommt vom Ausgang des Aktivkohlefilters 23 (Fig. 1) an den zweiten Eingang des Tanks mit Wasserorganismen 14 (Fig. 1). Somit wird die Anlage gemäß der Erfindung 2 Tage lang betrieben. Dabei werden die Kenndaten mit Hilfe des Rechners 2 (Fig. 1) ständig überwacht. Auf dem Rechner ist dabei eine Software "Steuerprogramm zur Wasseraufbereitung im Laufe der Verkaufsvorbereitung von Wasserorganismen" installiert. Am dritten Tag des Betriebs der vorgeschlagenen Vorrichtung kommt der Befehl vom vierten Daten-Schaltausgang des Rechners 2 (Fig. 1) an den Daten-Schalteingang des Boilers 19 (Fig. 1), dass die Wassererwärmung um 4° C im Tank mit den Wasserorganismen 14 (Fig. 1) beginnen muss. Die Information über die Änderung der Konzentration von organischen Substanzen im Tank mit Wasserorganismen 14 (Fig. 1) wird aufgrund der Verbindung des Eingangs der Konzentrationsmesseinheit für organische Substanzen 24 (Fig. 1) mit dem vierten Ausgang des Tanks mit Wasserorganismen 14 (Fig. 1), mit dem Daten-Schaltausgang der Konzentrationsmesseinheit für organische Substanzen 24 (Fig. 1) erhalten. Diese Information kommt an den fünften Daten-Schalteingang des Rechners 2 (Fig. 1). Der Rechner sendet einen Befehl an den Daten-Schalteingang der zweiten Pumpe (22), um ihre Leistung zu erhöhen, und gleichzeitig einen Befehl an den Daten-Schalteingang der Frischwasserzugabe-Einheit 21 (Fig. 1), um deren Fördermenge in den Tank für Wasserorganismen 14 (Fig. 1) zu vergrößern. Die Leistung und die Fördermenge sind so zu erhöhen, dass die Messdaten der stundenweisen Konzentrationsmessung der organischen Substanzen im Wasser des Tanks mit Wasserorganismen 14 (Fig. 1) 10% nach oben der Konzentration von organischen Substanzen nicht überschreiten, die dem Anfang der Wassertemperatursteigerung im Tank mit Wasserorganismen 14 (Fig. 1) vorausging. Der Prozess der Wassertemperaturveränderung (Erhöhung und Senkung) im Tank mit Wasserorganismen 14 (Fig. 1) dauert je 12 Stunden hin und zurück (dementsprechend nach unten oder nach oben). Wird eine Konzentration der organischen Substanzen im Wasser des Tanks mit Wasserorganismen 14 (Fig. 1) von 80 % der Konzentration der organischen Substanzen vor der vorausgehenden Temperatureinwirkung auf die Wasserorganismen erreicht, so gibt der Rechner 2 (Fig. 1) Befehle vom vierten Daten-Schaltausgang an den Eingang der zweiten Pumpe 22 (Fig. 1) und an den Eingang der Frischwasserzugabe-Einheit 21 (Fig. 1) ab, dass diese Vorrichtungen in ihren jeweiligen Normalbetrieb zurückgehen. Danach läuft das Waschen der Wasserorganismen ab, bis die Konzentration der organischen Substanzen im Wasser des Tanks mit Wasserorganismen 14 (Fig. 1) von max. 0,005 µg/l erreicht ist.

Wenn
- das Druckniveau im zeolithischen Filter 13 (Fig. 1) über 2,2 bar liegt,
- die Ammoniakstickstoff-Konzentration im Wasser mit Wasserorganismen 14 (Fig. 1) unter 0,9 mg/l liegt,
- die Konzentration der organischen Substanzen in der Konzentrationsmesseinheit für organische Substanzen 24 (Fig. 1) sich innerhalb einer stündlichen Messungsiteration um max. 10 % nach oben verändert,
- das Druckniveau im Aktivkohlefilter 23 (Fig. 1) unter 2,2 bar liegt,
- die Ammoniakstickstoff-Konzentration im Wasser des Waschwassertanks 1 (Fig. 1) unter 1,2 mg/Liter liegt,
- die NaCl-Konzentration im Wasser des Waschwassertanks 1 (Fig. 1) über 50 g/Liter liegt und
- der pH-Wert im Wasser des Waschwassertanks 1 (Fig. 1) über 11 liegt, dann gibt der Rechner 2 (Fig. 1) Befehle über seine Daten-Schaltausgänge für den Normalbetrieb der angemeldeten Vorrichtung ab, und zwar:
   - vom Ausgang des Rechners 2 (Fig. 1) wird der Befehl an den Daten-Schalteingang des ersten Luftverdichters 5 (Fig. 1) für dessen Normalbetrieb abgegeben;
   - der Daten-Schalteingang des vierten Verschlusses 11 (Fig. 1) empfängt den Befehl für die Öffnung des Verschlusses;
   - der Daten-Schalteingang des dritten Verschlusses 10 (Fig. 1) empfängt den Befehl für das Schließen des Verschlusses;
   - der Daten-Schalteingang des fünften Verschlusses 12 (Fig. 1) empfängt den Befehl für dessen Schließen;
   - der Daten-Schalteingang des siebenten Verschlusses 17 (Fig. 1) empfängt den Befehl für die Öffnung des Verschlusses;
   - der Daten-Schalteingang des sechsten Verschlusses 16 (Fig. 1) empfängt den Befehl für die Öffnung des Verschlusses;
   - der Daten-Schalteingang des ersten Verschlusses 8 (Fig. 1) empfängt den Befehl für dessen Schließen;
   - der Daten-Schalteingang des Boilers 19 (Fig. 1) empfängt den Befehl für dessen Abschalten;
   - der Daten-Schalteingang des zweiten Verschlusses 9 (Fig. 1) empfängt den Befehl für dessen Schließen;
   - der Daten-Schalteingang der ersten Pumpe 15 (Fig. 1) empfängt den Befehl für deren Einschalten;
   - der Daten-Schalteingang der zweiten Pumpe 22 (Fig. 1) empfängt den Befehl für deren Normalbetrieb;
   - der Daten-Schalteingang der UV-Bestrahlungseinheit 20 (Fig. 1) empfängt den Befehl für deren Abschalten;
   - der Daten-Schalteingang des zweiten Luftverdichters 18 (Fig. 1) empfängt den Befehl für dessen Einschalten;
   - der Daten-Schalteingang der Frischwasserzugabe-Einheit 21 (Fig. 1) empfängt den Befehl für deren Normalbetrieb;
   - vom fünften Daten-Schaltausgang des Rechners 2 (Fig. 1) wird der Befehl an den Daten-Schalteingang der Sedimentversetzungseinheit 6 (Fig. 1) für deren Abschalten abgegeben;
   - vom dritten Daten-Schaltausgang des Rechners 2 (Fig. 1) wird der Befehl an den Daten-Schalteingang der NaCl-Konzentrations-Regeleinheit 3 im Wasser (Fig. 1) für deren Abschalten abgegeben;
   - vom zweiten Ausgang des Rechners 2 (Fig. 1) wird der Befehl an den Daten-Schalteingang der pH-Konzentrations-Regeleinheit 4 im Wasser (Fig. 1) für deren Abschalten abgegeben.

Die Funktion der Anlage gemäß der Erfindung in dieser Betriebsart verläuft wie folgt. Das Waschwasser kommt vom zweiten Ausgang des Tanks mit Wasserorganismen 14 (Fig. 1) über den offenen Eingang des vierten Verschlusses 11 (Fig. 1) und danach über dessen Ausgang an den zweiten Eingang der ersten Pumpe 15 (Fig. 1). Vom ersten Ausgang der ersten Pumpe 15 (Fig. 1) wird das Wasser an den offenen Eingang des sechsten Verschlusses 16 (Fig. 1) gefördert. Vom Ausgang des sechsten Verschlusses 16 (Fig. 1) fließt das Wasser zum zweiten Eingang des zeolithischen Filters 13 (Fig. 1). Vom zweiten Ausgang des zeolithischen Filters 13 (Fig. 1) kommt das Wasser mit Sedimentfraktionen an den Eingang des siebenten Verschlusses 17 (Fig. 1). Danach wird das Wasser mit Sedimentfraktionen vom Ausgang des siebenten Verschlusses 17 (Fig. 1) an den dritten offenen Eingang der Sedimentabführungseinheit 7 (Fig. 1) gefördert. Vom dritten Ausgang des Tanks mit Wasserorganismen 14 (Fig. 1) wird ein Teil des Wassers über den Eingang der zweiten Pumpe 22 (Fig. 1) und danach über ihren Ausgang an den Eingang des Aktivkohlefilters 23 (Fig. 1) gefördert.

Das von organischen Beimischungen gereinigte Wasser fließt vom Ausgang des Aktivkohlefilters 23 (Fig. 1) in den zweiten Eingang des Tanks mit Wasserorganismen 14 (Fig. 1). Somit werden der Wasserreinigungsprozess und die Entfernung der durch die Wasserorganismen in das Wasser abgesonderten organischen Substanzen aufrechterhalten. Dabei kommt das Reinwasser ununterbrochen vom Ausgang der Frischwasserzugabe-Einheit 21 (Fig. 1) an den vierten Eingang des Tanks mit Wasserorganismen 14 (Fig. 1).

Das überflüssige Waschwasser wird vom ersten Ausgang des Tanks mit Wasserorganismen 14 (Fig. 1) an den zweiten Eingang der Sedimentabführungseinheit 7 (Fig. 1) abgeführt. Vom Ausgang des zweiten Luftverdichters 18 (Fig. 1) wird die Luft dem dritten Eingang des Tanks mit Wasserorganismen 14 (Fig. 1) zugeführt, um das Wasser mit Sauerstoff zu sättigen.

Die Reinigung des zeolithischen Filters dauert 5 Minuten. Danach kehrt die Wasseraufbereitungsanlage zur Verkaufsvorbereitung von Wasserorganismen (Fig. 1) in ihren Normalbetrieb zurück.

Wenn
- das Druckniveau im zeolithischen Filter 13 (Fig. 1) unter 2,2 bar abfällt,
- die Ammoniakstickstoff-Konzentration im Wasser mit Wasserorganismen im Tank 14 (Fig. 1) über 0,9 mg/l aufsteigt,
- die Konzentration der organischen Substanzen in der Konzentrationsmesseinheit für organische Substanzen 24 (Fig. 1) sich innerhalb einer stündlichen Messungsiteration um max. 10 % nach oben verändert,
- das Druckniveau im Aktivkohlefilter 23 (Fig. 1) unter 2,2 bar abfällt,
- die Ammoniakstickstoff-Konzentration im Wasser des Waschwassertanks 1 (Fig. 1) unter 1,2 mg/l fällt,
- die NaCl-Konzentration im Wasser des Waschwassertanks 1 (Fig. 1) über 50 g/l steigt, und
- der pH-Wert im Wasser des Waschwassertanks 1 (Fig. 1) den Wert 11 überschreitet, dann wird der Rechner 2 (Fig. 1) Befehle für den Normalbetrieb der beanspruchten Vorrichtung generieren, und zwar:
- vom vierten Daten-Schaltausgang des Rechners 2 (Fig. 1) wird der Befehl an den Eingang des ersten Luftverdichters 5 (Fig. 1) für dessen Normalbetrieb abgegeben;
- der Daten-Schalteingang des vierten Verschlusses 11 (Fig. 1) empfängt den Befehl für dessen Schließen;
- der Daten-Schalteingang des dritten Verschlusses 10 (Fig. 1) empfängt den Befehl für dessen Öffnung;
- der Daten-Schalteingang des fünften Verschlusses 12 (Fig. 1) empfängt den Befehl für die Öffnung des Verschlusses;
- der Daten-Schalteingang des siebenten Verschlusses 17 (Fig. 1) empfängt den Befehl für dessen Schließen;
- der Daten-Schalteingang des sechsten Verschlusses 16 (Fig. 1) empfängt den Befehl für dessen Öffnung;
- der Daten-Schalteingang des ersten Verschlusses 8 (Fig. 1) empfängt den Befehl für dessen Schließen;
- der Daten-Schalteingang des Boilers 19 (Fig. 1) empfängt den Befehl für dessen Abschalten;
- der Daten-Schalteingang des zweiten Verschlusses 9 (Fig. 1) empfängt den Befehl für dessen Schließen;
- der Daten-Schalteingang der ersten Pumpe 15 (Fig. 1) empfängt den Befehl für deren Einschalten;
- der Daten-Schalteingang der zweiten Pumpe 22 (Fig. 1) empfängt den Befehl für deren Normalbetrieb;
- der Daten-Schalteingang der UV-Bestrahlungseinheit 20 (Fig. 1) empfängt den Befehl für deren Abschalten;
- der Daten-Schalteingang des zweiten Luftverdichters 18 (Fig. 1) empfängt den Befehl für dessen Einschalten;
- der Daten-Schalteingang der Frischwasserzugabe-Einheit 21 (Fig. 1) empfängt den Befehl für deren Normalbetrieb;
- vom fünften Ausgang des Rechners 2 (Fig. 1) wird der Befehl an den Daten-Schalteingang der Sedimentversetzungseinheit 6 (Fig. 1) für deren Abschalten abgegeben;
- vom dritten Ausgang des Rechners 2 (Fig. 1) wird der Befehl an den Daten-Schalteingang der NaCl-Konzentrations-Regeleinheit 3 im Wasser (Fig. 1) für deren Einschalten abgegeben;
- vom zweiten Daten-Schaltausgang des Rechners (2) wird der Befehl an den Daten-Schalteingang der pH-Konzentrations-Regeleinheit 4 im Wasser (Fig. 1) für deren Einschalten abgegeben.

Die Funktion der Anlage gemäß der Erfindung verläuft in diesem Fall wie folgt. Das Waschwasser kommt vom zweiten Ausgang des Waschwassertanks 1 (Fig. 1) über den offenen Eingang des dritten Verschlusses 10 (Fig. 1) und danach über dessen Ausgang an den ersten Eingang der ersten Pumpe 15 (Fig. 1). Vom ersten Ausgang der ersten Pumpe 15 (Fig. 1) wird dieses Waschwasser an den offenen Eingang des sechsten Verschlusses 16 (Fig. 1) und dann von dessen Ausgang an den zweiten Eingang des zeolithischen Filters 13 (Fig. 1) gefördert. Das Waschwasser mit einer hohen Ammoniakstickstoff-Konzentration kommt vom zweiten Ausgang des zeolithischen Filters 13 (Fig. 1) an den Eingang des fünften Verschlusses 12 (Fig. 1). Danach wird es von dessen Ausgang an den zweiten Eingang des Waschwassertanks 1 (Fig. 1) gefördert. Vom fünften Ausgang des Waschwassertanks 1 (Fig. 1) wird ein Teil des Wassers mit einer NaCl-Konzentration unter 50 g/l an den Eingang der NaCl-Konzentrations-Regeleinheit 3 im Wasser (Fig. 1) gefördert. Hier wird das Wasser wieder aufbereitet, bis die NaCl-Konzentration auf über 50 g/l steigt. Dann wird es vom Ausgang dem dritten Eingang des Waschwassertanks 1 (Fig. 1) zugeführt. Die Daten über das Vorhandensein des trockenen NaCl kommen ständig vom Daten-Schaltausgang der NaCl-Konzentrations-Regeleinheit 3 im Wasser (Fig. 1) an den dritten Eingang des Rechners 2 (Fig. 1). Fällt der Vorrat an trockenem NaCl in der NaCl-Konzentrations-Regeleinheit 3 im Wasser (Fig. 1) bis zur unteren zulässigen Grenze ab, so schickt diese Einheit eine Anfrage zum Nachfüllen des trockenen NaCl ab. Ein Teil vom Waschwasser mit einem pH-Wert unter 11 wird vom ersten Ausgang des Waschwassertanks 1 (Fig. 1) dem Eingang der pH-Konzentrations-Regeleinheit 4 im Wasser (Fig. 1) zugeführt. In der pH-Konzentrations-Regeleinheit 4 im Wasser (Fig. 1) wird der pH-Wert des Waschwassers bis auf einen Wert über 11 erhöht. Vom Ausgang der pH-Konzentrations-Regeleinheit 4 im Wasser (Fig. 1) wird das Waschwasser mit einem pH-Wert über 11 an den vierten Eingang des Wasch-wassertanks 1 (Fig. 1) gefördert. Die Konstanthaltung der Soll-NaCl-Konzentration und des Soll-pH-Werts im Waschwasser des Waschwassertanks 1 (Fig. 1) trägt zur schnellen und ordentlichen Auffrischung des zeolithischen Filters 13 (Fig. 1) bei. Vom dritten Ausgang des Tanks mit Wasserorganismen 14 (Fig. 1) wird ein Teil des Wassers über den Eingang der zweiten Pumpe 22 (Fig. 1) und danach über deren Ausgang dem Eingang des Aktivkohlefilters 23 (Fig. 1) zugeführt. Das von organischen Substanzen gereinigte Wasser fließt vom Ausgang des Aktivkohlefilters 23 (Fig. 1) an den zweiten Eingang des Tanks mit Wasserorganismen 14 (Fig. 1). Somit werden der Wasserreinigungsprozess und die Entfernung der durch die Wasserorganismen abgesonderten organischen Substanzen aufrechterhalten. Dabei wird der vierte Eingang des Tanks mit Wasserorganismen 14 (Fig. 1) ständig mit Reinwasser vom Ausgang der Frischwasserzugabe-Einheit 21 (Fig. 1) gespeist. Das überflüssige Waschwasser wird vom ersten Ausgang des Tanks mit Wasserorganismen 14 (Fig. 1) an den zweiten Eingang der Sedimentabführungseinheit 7 (Fig. 1) abgeführt. Um das Wasser mit Sauerstoff zu sättigen, wird die Luft vom Ausgang des zweiten Luftverdichters 18 (Fig. 1) an den dritten Eingang des Tanks mit Wasserorganismen 14 (Fig. 1) gefördert. Der Auffrischungsvorgang des zeolithischen Filters 13 (Fig. 1) dauert ca. 20 Minuten. Danach wird der Filter mit dem Wasser aus dem Tank mit Wasserorganismen 14 (Fig. 1) nachgespült.

Beim Nachspülen des zeolithischen Filters 13 (Fig. 1) werden folgende Befehle vom vierten Daten-Schaltausgang des Rechners 2 (Fig. 1) abgegeben:
- an den Daten-Schalteingang des ersten Luftverdichters 5 (Fig. 1) über dessen Normalbetrieb,
- an den Daten-Schalteingang des vierten Verschlusses 11 (Fig. 1) für dessen Öffnung,
- an den Daten-Schalteingang des dritten Verschlusses 10 (Fig. 1) für dessen Schließen,
- an den Daten-Schalteingang des fünften Verschlusses 12 (Fig. 1) für dessen Schließen,
- an den Daten-Schalteingang des siebenten Verschlusses 17 (Fig. 1) für dessen Öffnung,
- an den Daten-Schalteingang des sechsten Verschlusses 16 (Fig. 1) für dessen Öffnung,
- an den Daten-Schalteingang des ersten Verschlusses 8 (Fig. 1) für dessen Schließen,
- an den Daten-Schalteingang des Boilers 19 (Fig. 1) für dessen Abschalten,
- an den Daten-Schalteingang des zweiten Verschlusses 9 (Fig. 1) für dessen Schließen,
- an den Daten-Schalteingang der ersten Pumpe 15 (Fig. 1) für deren Einschalten,
- an den Daten-Schalteingang der zweiten Pumpe 12 (Fig. 1) für deren Normalbetrieb,
- an den Daten-Schalteingang der UV-Bestrahlungseinheit 20 (Fig. 1) für deren Abschalten,
- an den Daten-Schalteingang des zweiten Luftverdichter 18 (Fig. 1) für dessen Einschalten und
- an den Daten-Schalteingang der Frischwasserzugabe-Einheit 21 (Fig. 1) für deren Normalbetrieb.

Vom fünften Daten-Schaltausgang des Rechners 2 (Fig. 1) wird der Befehl an den Daten-Schalteingang der Sedimentversetzungseinheit 6 (Fig. 1) für deren Abschalten abgegeben. Vom dritten Daten-Schaltausgang des Rechners 2 (Fig. 1) wird der Befehl an den Daten-Schalteingang der NaCl-Konzentrations-Regeleinheit 3 im Wasser (Fig. 1) für deren Einschalten abgegeben. Vom zweiten Daten-Schaltausgang des Rechners 2 (Fig. 1) wird der Befehl an den Daten-Schalteingang der pH-Konzentrations-Regeleinheit 4 im Wasser (Fig. 1) für deren Einschalten abgegeben.

Die Funktion der Anlage gemäß der Erfindung im Nachspül-Betrieb des zeolithischen Filters 13 (Fig. 1) läuft wie folgt ab. Das Waschwasser kommt vom zweiten Ausgang des Tanks mit Wasserorganismen 13 (Fig. 1) über den offenen Eingang des vierten Verschlusses 11 (Fig. 1) und dann über dessen Ausgang an den zweiten Eingang der ersten Pumpe 15 (Fig. 1). Von ihrem ersten Ausgang fließt das Wasser an den offenen Eingang des sechsten Verschlusses 16 (Fig. 1). Von seinem Ausgang wird das Wasser dem zweiten Eingang des zeolithischen Filters 13 (Fig. 1) zugeführt. Das Waschwasser mit hoher Ammoniakstickstoff-Konzentration kommt vom zweiten Ausgang des zeolithischen Filters 13 (Fig. 1) an den Eingang des siebenten Verschlusses 17 (Fig. 1). Vom Ausgang des siebenten Verschlusses 17 (Fig. 1) fließt das Waschwasser an den dritten Eingang der Sedimentabführungseinheit 7 (Fig. 1). Vom fünften Ausgang des Waschwassertanks 1 (Fig. 1) wird ein Teil des Wassers mit einer NaCl-Konzentration unter 50 g/l dem Eingang der NaCl-Konzentrations-Regeleinheit 3 im Wasser (Fig. 1) zugeführt. Hier wird es wieder aufbereitet, bis die Konzentration über 50 g/l liegt. Danach wird das Wasser vom Ausgang der NaCl-Konzentrations-Regeleinheit 3 (Fig. 1) an den dritten Eingang des Waschwasser-tanks 1 (Fig. 1) gefördert. Die Daten über das Vorhandensein des trockenen NaCl kommen ständig vom Daten-Schaltausgang der NaCl-Konzentrations-Regeleinheit 3 im Wasser (Fig. 1) an den dritten Daten-Schalteingang des Rechners 2 (Fig. 1). Ein Teil des Waschwassers mit einem pH-Wert unter 11 wird vom ersten Ausgang des Waschwassertanks 1 (Fig. 1) an den Eingang der pH-Konzentrations-Regeleinheit 4 im Wasser (Fig. 1) gefördert. In der pH-Konzentrations-Regeleinheit 4 im Wasser (Fig. 1) wird der pH-Wert des Waschwassers bis auf einen Wert von über 11 erhöht. Vom Ausgang der pH-Konzentrations-Regeleinheit 4 im Wasser (Fig. 1) wird das Waschwasser mit einem pH-Wert über 11 an den vierten Eingang des Waschwassertanks 1 (Fig. 1) gefördert. Die Konstanthaltung der Soll-NaCl-Konzentration und des Soll-pH-Werts im Waschwasser des Waschwassertanks 1 (Fig. 1) trägt zur schnellen und ordentlichen Umwandlung von Ammoniakstickstoff in gasförmigen Stickstoff im Waschwasser des Waschwassertanks 1 (Fig. 1) bei. Dabei wird der Befehl vom vierten Daten-Schaltausgang des Rechners 2 (Fig. 1) an den Daten-Schalteingang des ersten Luftverdichters 5 (Fig. 1) abgegeben, dass seine Leistung um das Zweifache vergrößert werden muss. Vom Ausgang des ersten Luftverdichters kommt die Luft an den ersten Eingang des Waschwassertanks 1 (Fig. 1), um das Waschwasser darin zu belüften. Ein Teil des Wassers wird vom dritten Ausgang des Tanks mit Wasserorganismen 14 (Fig. 1) über den Eingang der zweiten Pumpe 22 (Fig. 1) und dann über deren Ausgang an den Eingang des Aktivkohlefilters 23 (Fig. 1) geleitet. Das von organischen Substanzen gereinigte Wasser fließt vom Ausgang des Aktivkohlefilters 23 (Fig. 1) an den zweiten Eingang des Tanks mit Wasserorganismen 14 (Fig. 1) und schließt damit den Wasserreinigungsprozess und die Entfernung der durch die Wasserorganismen abgesonderten organischen Substanzen ab. Dabei kommt das Reinwasser ständig vom Ausgang der Frischwasserzugabe-Einheit 21 (Fig. 1) an den vierten Eingang des Tanks mit Wasserorganismen 14 (Fig. 1). Das überflüssige Waschwasser wird vom ersten Ausgang des Tanks mit Wasserorganismen 14 (Fig. 1) an den zweiten Eingang der Sedimentabführungseinheit 7 (Fig. 1) abgeleitet. Vom Ausgang des zweiten Luftverdichters 18 (Fig. 1) wird die Luft an den dritten Eingang des Tanks mit Wasserorganismen 14 (Fig. 1) gefördert, um das Wasser darin mit Sauerstoff zu sättigen. Das Nachspülen des zeolithischen Filters 13 (Fig. 1) dauert 5 Minuten. Danach kehrt die Anlage gemäß der Erfindung in den Normalbetrieb zurück.

Wenn
- das Druckniveau im zeolithischen Filter 13 (Fig. 1) unter 2,2 bar liegt,
- die Ammoniakstickstoff-Konzentration im Wasser mit Wasserorganismen 14 (Fig. 1) unter 0,9 mg/l fällt,
- die Konzentration der organischen Substanzen in der Konzentrationsmesseinheit für organische Substanzen 24 (Fig. 1) sich innerhalb einer stündlichen Messungsiteration um max. 10 % nach oben verändert,
- das Druckniveau im Aktivkohlefilter 23 (Fig. 1) über 2,2 bar steigt,
- die Ammoniakstickstoff-Konzentration im Wasser des Waschwassertanks 1 (Fig. 1) unter 1,2 mg/l fällt,
- die NaCl-Konzentration im Wasser des Waschwassertanks 1 (Fig. 1) auf über 50 g/l steigt und
- der pH-Wert im Wasser des Waschwassertanks 1 (Fig. 1) über 11 liegt, dann gibt der Rechner 2 (Fig. 1) Befehle für den Normalbetrieb ab, und zwar:
- vom vierten Daten-Schaltausgang des Rechners 2 (Fig. 1) an den Daten-Schalteingang des ersten Luftverdichters 5 (Fig. 1) für dessen Normalbetrieb;
- vom vierten Daten-Schaltausgang des Rechners 2 (Fig. 1) an den Daten-Schalteingang des vierten Verschlusses 11 (Fig. 1) für dessen Öffnung;
- vom vierten Daten-Schaltausgang des Rechners 2 (Fig. 1) an den Daten-Schalteingang des dritten Verschlusses 10 (Fig. 1) für dessen Schließen;
- vom vierten Daten-Schaltausgang des Rechners 2 (Fig. 1) an den Daten-Schalteingang des fünften Verschlusses 12 (Fig. 1) für dessen Schließen;
- vom vierten Daten-Schaltausgang des Rechners 2 (Fig. 1) an den Daten-Schalteingang des siebenten Verschlusses 17 (Fig. 1) für dessen Schließen;
- vom vierten Daten-Schaltausgang des Rechners 2 (Fig. 1) an den Daten-Schalteingang des sechsten Verschlusses 16 (Fig. 1) für dessen Schließen;
- vom vierten Daten-Schaltausgang des Rechners 2 (Fig. 1) an den Daten-Schalteingang des ersten Verschlusses 8 (Fig. 1) für dessen Öffnung;
- vom vierten Daten-Schaltausgang des Rechners 2 (Fig. 1) an den Daten-Schalteingang des Boilers 19 (Fig. 1) für dessen Normalbetrieb;
- vom vierten Daten-Schaltausgang des Rechners 2 (Fig. 1) an den Daten-Schalteingang des zweiten Verschlusses 9 (Fig. 1) für dessen Öffnung;
- vom vierten Daten-Schaltausgang des Rechners 2 (Fig. 1) an den Daten-Schalteingang der ersten Pumpe 15 (Fig. 1) für deren Einschalten;
- vom vierten Daten-Schaltausgang des Rechners 2 (Fig. 1) an den Daten-Schalteingang der zweiten Pumpe 22 (Fig. 1) für deren Abschalten;
- vom vierten Daten-Schaltausgang des Rechners 2 (Fig. 1) an den Daten-Schalteingang der UV-Bestrahlungseinheit 20 (Fig. 1) für deren Einschalten;
- vom vierten Daten-Schaltausgang des Rechners 2 (Fig. 1) an den Daten-Schalteingang des zweiten Luftverdichters 18 (Fig. 1) für dessen Einschalten;
- vom vierten Daten-Schaltausgang des Rechners 2 (Fig. 1) an den Daten-Schalteingang der Frischwasserzugabe-Einheit 21 (Fig. 1) für deren Normalbetrieb;
- vom fünften Ausgang des Rechners 2 (Fig. 1) an den Daten-Schalteingang der Sedimentversetzungseinheit 6 (Fig. 1) für deren Abschalten;
- vom dritten Ausgang des Rechners 2 (Fig. 1) an den Daten-Schalteingang der NaCl-Konzentrations-Regeleinheit 3 im Wasser (Fig. 1) für deren Abschalten;
- vom zweiten Ausgang des Rechners 2 (Fig. 1) an den Daten-Schalteingang der pH-Konzentrations-Regeleinheit 4 im Wasser (Fig. 1) für deren Abschalten.

Die Anlage gemäß der Erfindung funktioniert in dieser Betriebsart wie folgt.
Das Waschwasser kommt vom zweiten Ausgang des Tanks mit Wasserorganismen 14 (Fig. 1) über den offenen Eingang des vierten Verschlusses 11 (Fig. 1) und danach über dessen Ausgang an den zweiten Eingang der ersten Pumpe 15 (Fig. 1). Vom Ausgang der ersten Pumpe 15 (Fig. 1) fließt das Wasser an den offenen Eingang des ersten Verschlusses 8 (Fig. 1). Dann wird das Wasser vom Verschluss-Ausgang dem Eingang des Boilers 19 (Fig. 1) zugeführt. Hier wird es bis zur Soll-Temperatur erwärmt. Vom Ausgang des Boilers 19 (Fig. 1) fließt das erwärmte Wasser an den ersten Eingang des zeolithischen Filters 13 (Fig. 1). Das von Ammoniakstickstoff gereinigte Wasser kommt vom ersten Ausgang des zeolithischen Filters 13 (Fig. 1) an den Eingang der UV-Bestrahlungseinheit 20 (Fig. 1). Hier wird es desinfiziert. Danach fließt das Wasser vom Ausgang der UV-Bestrahlungseinheit 20 (Fig. 1) an den offenen Eingang des zweiten Verschlusses 9 (Fig. 1). Von dessen Ausgang kommt das Wasser an den ersten Eingang des Tanks mit Wasserorganismen 14 (Fig. 1). Vom dritten Ausgang des Tanks mit Wasserorganismen 14 (Fig. 1) wird die Wasserzuführung über den Eingang der zweiten Pumpe 22 (Fig. 1) angehalten, bis die Aktivkohle im Aktivkohlefilter 23 (Fig. 1) gewechselt ist. Der Aktivkohlewechsel nimmt bis zu 120 Minuten in Anspruch. Dann wird der Befehl vom vierten Daten-Schaltausgang des Rechners 2 (Fig. 1) an den Daten-Schalteingang der zweiten Pumpe 22 (Fig. 1) für deren Einschalten geschickt. Danach kehrt die Wasseraufbereitungsanlage zur Verkaufsvorbereitung von Wasserorganismen (Fig. 1) in den Normalbetrieb zurück.

Wenn
- das Druckniveau im zeolithischen Filter 13 (Fig. 1) unter 2,2 bar liegt,
- die Ammoniakstickstoff-Konzentration im Wasser mit Wasserorganismen 14 (Fig. 1) unter 0,9 mg/l liegt,
- die Konzentration der organischen Substanzen in der Konzentrationsmesseinheit für organische Substanzen 24 (Fig. 1) sich innerhalb einer stündlichen Messungsiteration um max. 10 % nach oben verändert,
- das Druckniveau im Aktivkohlefilter 23 (Fig. 1) unter 2,2 bar liegt,
- die Ammoniakstickstoff-Konzentration im Wasser des Waschwassertanks 1 (Fig. 1) über 1,2 mg/l liegt,
- die NaCl-Konzentration im Wasser des Waschwassertanks 1 (Fig. 1) unter 50 g/l ist und
- der pH-Wert im Wasser des Waschwassertanks 1 (Fig. 1) unter 11 fällt, dann gibt der Rechner 2 (Fig. 1) Befehle für den Normalbetrieb ab, und zwar:
- vom vierten Daten-Schaltausgang des Rechners 2 (Fig. 1) wird der Befehl an den Daten-Schalteingang des ersten Luftverdichters 5 (Fig. 1) für dessen Normalbetrieb abgegeben;
- vom vierten Daten-Schaltausgang des Rechners 2 (Fig. 1) wird der Befehl an den Daten-Schalteingang des vierten Verschlusses 11 (Fig. 1) für dessen Öffnung abgegeben;
- vom vierten Daten-Schaltausgang des Rechners 2 (Fig. 1) wird der Befehl an den Daten-Schalteingang des dritten Verschlusses 10 (Fig. 1) für dessen Schließen abgegeben;
- vom vierten Daten-Schaltausgang des Rechners 2 (Fig. 1) wird der Befehl an den Daten-Schalteingang des fünften Verschlusses 12 (Fig. 1) für dessen Schließen abgegeben;
- vom vierten Daten-Schaltausgang des Rechners 2 (Fig. 1) wird der Befehl an den Daten-Schalteingang des siebenten Verschlusses 17 (Fig. 1) für dessen Schließen abgegeben;
- vom vierten Daten-Schaltausgang des Rechners 2 (Fig. 1) wird der Befehl an den Daten-Schalteingang des sechsten Verschlusses 16 (Fig. 1) für dessen Schließen abgegeben;
- vom vierten Daten-Schaltausgang des Rechners 2 (Fig. 1) wird der Befehl an den Daten-Schalteingang des ersten Verschlusses 8 (Fig. 1) für dessen Öffnung abgegeben;
- vom vierten Daten-Schaltausgang des Rechners 2 (Fig. 1) wird der Befehl an den Daten-Schalteingang des Boilers 19 (Fig. 1) für dessen Normalbetrieb abgegeben;
- vom vierten Daten-Schaltausgang des Rechners 2 (Fig. 1) wird der Befehl an den Daten-Schalteingang des zweiten Verschlusses 9 (Fig. 1) für dessen Öffnung abgegeben;
- vom vierten Daten-Schaltausgang des Rechners 2 (Fig. 1) wird der Befehl an den Daten-Schalteingang der ersten Pumpe 15 (Fig. 1) für deren Einschalten abgegeben;
- vom vierten Daten-Schaltausgang des Rechners 2 (Fig. 1) wird der Befehl an den Daten-Schalteingang der zweiten Pumpe 22 (Fig. 1) für deren Normalbetrieb abgegeben;
- vom vierten Daten-Schaltausgang des Rechners 2 (Fig. 1) wird der Befehl an den Daten-Schalteingang der UV-Bestrahlungseinheit 20 (Fig. 1) für deren Einschalten abgegeben;
- vom vierten Daten-Schaltausgang des Rechners 2 (Fig. 1) wird der Befehl an den Daten-Schalteingang des zweiten Luftverdichters 18 (Fig. 1) für dessen Einschalten abgegeben;
- vom vierten Daten-Schaltausgang des Rechners 2 (Fig. 1) wird der Befehl an den Daten-Schalteingang der Frischwasserzugabe-Einheit 21 (Fig. 1) für deren Normalbetrieb abgegeben;
- vom dritten Daten-Schaltausgang des Rechners 2 (Fig. 1) wird der Befehl an den Daten-Schalteingang der Sedimentversetzungseinheit 6 (Fig. 1) für deren Abschalten abgegeben;
- vom dritten Daten-Schaltausgang des Rechners 2 (Fig. 1) wird der Befehl an den Daten-Schalteingang der NaCl-Konzentrations-Regeleinheit 3 im Wasser (Fig. 1) für deren Einschalten abgegeben;
- vom zweiten Daten-Schaltausgang des Rechners 2 (Fig. 1) wird der Befehl an den Daten-Schalteingang der pH-Konzentrations-Regeleinheit 4 im Wasser (Fig. 1) für deren Einschalten abgegeben.

Die Anlage gemäß der Erfindung funktioniert in dieser Betriebsart wie folgt.
Das Waschwasser kommt vom zweiten Ausgang des Tanks mit Wasserorganismen 14 (Fig. 1) über den offenen Eingang des vierten Verschlusses 11 (Fig. 1) und danach über dessen Ausgang an den zweiten Eingang der ersten Pumpe 15 (Fig. 1). Vom zweiten Ausgang der ersten Pumpe 15 (Fig. 1) wird das Wasser dem offenen Eingang des ersten Verschlusses 8 (Fig. 1) zugeführt. Von seinem Ausgang wird es dem Eingang des Boilers 19 (Fig. 1) zugeführt. Hier wird dieses Wasser bis zur Soll-Temperatur erwärmt. Vom Ausgang des Boilers 19 (Fig. 1) wird das erwärmte Wasser an den ersten Eingang des zeolithischen Filters 13 (Fig. 1) gefördert. Das ammoniakstickstofffreie Wasser fließt vom ersten Ausgang des zeolithischen Filters 13 (Fig. 1) an den Eingang der UV-Bestrahlungseinheit 20 (Fig. 1). Hier wird es desinfiziert und fließt danach vom Ausgang der UV-Bestrahlungseinheit 20 (Fig. 1) an den offenen Eingang des zweiten Verschlusses 9 (Fig. 1). Vom Ausgang des zweiten Verschlusses 9 (Fig. 1) kommt das genannte Wasser an den ersten Eingang des Tanks mit Wasserorganismen 14 (Fig. 1). Vom dritten Ausgang des Tanks mit Wasserorganismen 14 (Fig. 1) wird ein Teil des Wassers über den Eingang der zweiten Pumpe 22 (Fig. 1) und dementsprechend über deren Ausgang an den Eingang des Aktivkohlefilters 23 (Fig. 1) gefördert. Das auf diese Weise von organischen Substanzen gereinigte Wasser fließt vom Ausgang des Aktivkohlefilters 23 (Fig. 1) an den zweiten Eingang des Tanks mit Wasserorganismen 14 (Fig. 1). Vom fünften Ausgang des Waschwassertanks 1 (Fig. 1) wird ein Teil des Wassers mit der NaCl-Konzentration unter 50 g/l dem Eingang der NaCl-Konzentrations-Regeleinheit 3 im Wasser (Fig. 1) zugeführt. Hier wird es aufbereitet, bis die Konzentration über 50 g/l steigt. Danach wird das Wasser vom Ausgang dieser Einheit an den dritten Eingang des Waschwassertanks 1 (Fig. 1) gefördert. Vom Daten-Schaltausgang der NaCl-Konzentrations-Regeleinheit 3 im Wasser (Fig. 1) kommen die Daten über das Vorhandensein des trockenen NaCl ständig an den dritten Daten-Schalteingang des Rechners 2 (Fig. 1). Vom ersten Ausgang des Waschwassertanks 1 (Fig. 1) wird ein Teil des Waschwassers mit einem pH-Wert unter 11 dem Eingang der pH-Konzentrations-Regeleinheit 4 im Wasser (Fig. 1) zugeführt. In der pH-Konzentrations-Regeleinheit 4 im Wasser (Fig. 1) wird der pH-Wert des Waschwassers bis auf einen Wert von über 11 erhöht. Vom Ausgang der pH-Konzentrations-Regeleinheit 4 im Wasser (Fig. 1) wird das Waschwasser mit dem pH-Wert über 11 an den vierten Eingang des Waschwassertanks 1 (Fig. 1) gefördert. Die Konstanthaltung der Soll-NaCl-Konzentration und des Soll-pH-Werts im Waschwasser des Waschwassertanks 1 (Fig. 1) trägt zur schnellen und ordentlichen Umwandlung des Ammoniakstickstoffs in gasförmigen Stickstoff im Wasser des Waschwassertanks 1 (Fig. 1) bei. Dabei wird der Befehl vom vierten Daten-Schaltausgang des Rechners 2 (Fig. 1) an den Daten-Schalteingang des ersten Luftverdichters 5 (Fig. 1) abgegeben, dass dessen Leistung um das Zweifache vergrößert werden muss. Die Luft kommt vom Ausgang des ersten Luftverdichters 5 (Fig. 1) an den ersten Eingang des Waschwassertanks 1 (Fig. 1), um das Wasser darin zu belüften. Fällt die Ammoniakstickstoff-Konzentration im Wasser des Waschwassertanks 1 (Fig. 1) unter 1,2 mg/l ab und steigen die NaCl-Konzentration im Wasser des Waschwassertanks 1 (Fig. 1) auf über 50 g/l und der pH-Wert im Wasser des Waschwassertanks 1 (Fig. 1) auf über 11 an, so wird vom dritten Daten-Schaltausgang des Rechners 2 (Fig. 1) an den Daten-Schalteingang der NaCl-Konzentrations-Regeleinheit 3 im Wasser (Fig. 1) ein Befehl für deren Halt abgegeben. Vom zweiten Daten-Schaltausgang des Rechners (2) wird der Befehl an den Daten-Schalteingang der pH-Konzentrations-Regeleinheit 4 im Wasser (Fig. 1) für deren Halt abgegeben. Vom vierten Daten-Schaltausgang des Rechners 2 (Fig. 1) wird der Befehl an den Daten-Schalteingang des ersten Luftverdichters 5 (Fig. 1) für dessen Umschaltung auf Normalbetrieb abgegeben. Sobald die Konzentration der Sedimente am Boden des Waschwassertanks 1 (Fig. 1) ihren zulässigen Grenzwert erreicht, bekommt der erste Daten-Schalteingang des Rechners 2 (Fig. 1) sofort eine Meldung darüber. Dabei kommt der Befehl vom fünften Ausgang des Rechners 2 (Fig. 1) an den Daten-Schalteingang der Sedimentversetzungseinheit 6 (Fig. 1) für deren Einschalten. Die Sedimente kommen vom dritten Ausgang des Waschwassertanks 1 (Fig. 1) an den Eingang der Sedimentversetzungseinheit 6 (Fig. 1). Von deren Ausgang werden die Sedimente an den vierten Eingang der Sedimentabführungseinheit 7 (Fig. 1) gefördert. Das überflüssige Waschwasser fließt vom ersten Ausgang des Waschwassertanks 1 (Fig. 1) an den zweiten Eingang der Sedimentabführungseinheit 7 (Fig. 1).

Der Auffrischungsvorgang der Wasserlösung im Waschwassertank 1 (Fig. 1) dauert mehr als 4 Tage (über 96 Stunden).

### Beispiel 1

Der Tank für Wasserorganismen 14 (Fig. 1) wurde mit 8.500 kg Hausen gefüllt. Die Wassertemperatur in diesem Tank betrug 24° C. Der Wasserinhalt im Tank betrug 150 m³. Der Tagesumfang des in den Tank für Wasserorganismen 14 (Fig. 1) zugeführten Frischwassers betrug 45 m³. Die Pumpenleistung bei Förderung des Wassers aus dem Tank mit Wasserorganismen 14 (in diesem Beispiel - Hausen) (Fig. 1) zum Eingang des Aktivkohlefilters 24 (Fig. 1) war 30 m³/h. Die Pumpenleistung bei Förderung des Wassers zum Eingang des zeolithischen Filters 13 (Fig. 1) betrug 150 m³/h. Während der Verkaufsvorbereitung wurden die Hausen am dritten Tag des Waschens einem Stress ausgesetzt. Die Wassertemperatur wurde innerhalb von 12 Stunden um 4° C (bis auf 28° C) erhöht und innerhalb der nächsten 12 Stunden von 28° C auf 24° C gesenkt. Während der Verkaufsvorbereitung von Hausen wurde der zeolithische Filter 13 (Fig. 1) zweimal aufgefrischt und einmal gewaschen. Das Druckniveau im zeolithischen Filter 13 (Fig. 1) der Wasseraufbereitungsanlage zur Verkaufsvorbereitung von Wasserorganismen gemäß der Erfindung lag unter 2,2 bar. Die Ammoniakstickstoff-Konzentration im Wasser mit Wasserorganismen 14 (Fig. 1) fiel unter 0,9 mg/l. Die Konzentration der organischen Substanzen in der Konzentrationsmesseinheit für organische Substanzen 24 (Fig. 1) veränderte sich innerhalb einer stündlichen Messungsiteration um max. 10 % nach oben. Das Druckniveau im Aktivkohlefilter 23 (Fig. 1) fiel unter 2,2 bar. Die Ammoniakstickstoff-Konzentration im Wasser des Waschwassertanks 1 (Fig. 1) lag unter 1,2 mg/l. Die NaCl-Konzentration im Wasser des Waschwassertanks 1 (Fig. 1) stieg über 50 g/l. Der pH-Wert im Wasser des Waschwassertanks 1 (Fig. 1) lag über 11.

Dabei wurde der Befehl vom vierten Daten-Schaltausgang des Rechners 2 (Fig. 1) an den Daten-Schalteingang des ersten Luftverdichters 5 (Fig. 1) für dessen Umschaltung auf Normalbetrieb abgegeben. Vom vierten Daten-Schaltausgang des Rechners 2 (Fig. 1) kam der Befehl an den Daten-Schalteingang des vierten Verschlusses 11 (Fig. 1) für dessen Öffnung. Vom vierten Daten-Schaltausgang des Rechners 2 (Fig. 1) kam der Befehl an den Daten-Schalteingang des dritten Verschlusses 10 (Fig. 1) für dessen Schließen. Vom vierten Daten-Schaltausgang des Rechners 2 (Fig. 1) kam der Befehl an den Daten-Schalteingang des fünften Verschlusses 12 (Fig. 1) für dessen Schließen. Vom vierten Daten-Schaltausgang des Rechners 2 (Fig. 1) kam der Befehl an den Daten-Schalteingang des siebenten Verschlusses 17 (Fig. 1) für dessen Schließen. Vom vierten Daten-Schaltausgang des Rechners 2 (Fig. 1) kam der Befehl an den Daten-Schalteingang des sechsten Verschlusses 16 (Fig. 1) für dessen Schließen. Vom vierten Daten-Schaltausgang des Rechners 2 (Fig. 1) kam der Befehl an den Daten-Schalteingang des ersten Verschlusses 8 (Fig. 1) für dessen Öffnung. Vom vierten Daten-Schaltausgang des Rechners 2 (Fig. 1) kam der Befehl an den Daten-Schalteingang des Boilers 19 (Fig. 1) für dessen Normalbetrieb. Vom vierten Daten-Schaltausgang des Rechners 2 (Fig. 1) kam der Befehl an den Daten-Schalteingang des zweiten Verschlusses 9 (Fig. 1) für dessen Öffnung. Vom vierten Daten-Schaltausgang des Rechners 2 (Fig. 1) kam der Befehl an den Daten-Schalteingang der ersten Pumpe 15 (Fig. 1) für deren Einschalten. Vom vierten Daten-Schaltausgang des Rechners 2 (Fig. 1) kam der Befehl an den Daten-Schalteingang der zweiten Pumpe 22 (Fig. 1) für deren Umschaltung auf Normalbetrieb. Vom vierten Daten-Schaltausgang des Rechners 2 (Fig. 1) kam der Befehl an den Daten-Schalteingang der UV-Bestrahlungseinheit 20 (Fig. 1) für deren Einschalten. Vom vierten Daten-Schaltausgang des Rechners 2 (Fig. 1) kam der Befehl an den Daten-Schalteingang des zweiten Luftverdichters 18 (Fig. 1) für dessen Einschalten. Vom vierten Daten-Schaltausgang des Rechners 2 (Fig. 1) kam der Befehl an den Daten-Schalteingang der Frischwasserzugabe-Einheit 21 (Fig. 1) für deren Normalbetrieb. Vom fünften Daten-Schaltausgang des Rechners 2 (Fig. 1) kam der Befehl an den Daten-Schalteingang der Sedimentversetzungseinheit 6 (Fig. 1) für deren Abschalten. Vom dritten Daten-Schaltausgang des Rechners 2 (Fig. 1) kam der Befehl an den Daten-Schalteingang der NaCl-Konzentrations-Regeleinheit 3 im Wasser (Fig. 1) für deren Abschalten. Vom zweiten Daten-Schaltausgang des Rechners 2 (Fig. 1) kam der Befehl an den Daten-Schalteingang der pH-Konzentrations-Regeleinheit 4 im Wasser (Fig. 1) für deren Abschalten.

Die Anlage gemäß der Erfindung funktionierte in dieser Betriebsart wie folgt. Das Waschwasser kam vom zweiten Ausgang des Tanks mit Wasserorganismen 14 (Fig. 1) über den offenen Eingang des vierten Verschlusses 11 (Fig. 1) und danach über dessen Ausgang an den zweiten Eingang der ersten Pumpe 15 (Fig. 1). Anschließend wurde das Wasser von deren Ausgang an den offenen Eingang des ersten Verschlusses 8 (Fig. 1) gefördert. Vom Ausgang des ersten Verschlusses 8 (Fig. 1) wurde das Waschwasser dem Eingang des Boilers 19 (Fig. 1) zugeführt. Hier wurde es bis zur Soll-Temperatur erwärmt. Vom Ausgang des Boilers 19 (Fig. 1) wurde das erwärmte Wasser an den ersten Eingang des zeolithischen Filters 13 (Fig. 1) gefördert. Das von Ammoniakstickstoff gereinigte Wasser kam vom ersten Ausgang des zeolithischen Filters 13 (Fig. 1) an den Eingang der UV-Bestrahlungseinheit 20 (Fig. 1). Hier wurde es desinfiziert. Danach floss dieses Wasser vom Ausgang der UV-Bestrahlungseinheit 20 (Fig. 1) zum offenen Eingang des zweiten Verschlusses 9 (Fig. 1). Von dessen Ausgang aus kam das Wasser an den ersten Eingang des Tanks mit Wasserorganismen 14 (Fig. 1). Vom dritten Ausgang des Tanks mit Wasserorganismen 14 (Fig. 1) wurde ein Teil des Wassers über den Eingang der zweiten Pumpe 22 (Fig. 1) und danach über deren Ausgang an den Eingang des Aktivkohlefilters 23 (Fig. 1) gefördert. Danach kam das von organischen Substanzen gereinigte Wasser vom Ausgang des Aktivkohlefilters 23 (Fig. 1) an den zweiten Eingang des Tanks mit Wasserorganismen 14 (Fig. 1). Anschließend wurde die Anlage gemäß der Erfindung 2 Tage lang unter ständiger Überwachung der technischen Kenndaten durch den Rechner 2 (Fig. 1) betrieben. Am dritten Betriebstag kam der Befehl über die Wassererwärmung um 4° C im Tank mit Wasserorganismen 14 (Fig. 1) vom vierten Daten-Schaltausgang des Rechners 2 (Fig. 1) an den Eingang des Boilers 19 (Fig. 1). Die Daten über die Konzentrationsänderung der organischen Substanzen im Tank mit Wasserorganismen 14 (Fig. 1) kamen vom Daten-Schaltausgang der Konzentrationsmesseinheit für organische Substanzen 24 (Fig. 1) an den fünften Daten-Schalteingang des Rechners 2 (Fig. 1). Der Rechner 2 sandte den Befehl an den Daten-Schalteingang der zweiten Pumpe 22 (Fig. 1), um deren Leistung zu erhöhen, und gleichzeitig an den Daten-Schalteingang der Frischwasserzugabe-Einheit 21 (Fig. 1), um den Umfang der Förderung des Wassers in den Tank für Wasserorganismen 14 (Fig. 1) zu vergrößern. Dabei durften die Messdaten der stundenweisen Konzentrationsmessung der organischen Substanzen im Wasser des Tanks mit Wasserorganismen 14 (Fig. 1) 10 % der Konzentration von organischen Substanzen nicht überschreiten, die dem Beginn der Wassertemperatursteigerung im Tank mit Wasserorganismen 14 (Fig. 1) vorausging.

Der Prozess der Wassertemperaturmessung im Tank mit Wasserorganismen 14 (Fig. 1) dauerte 12 Stunden in einer Richtung (z. B. Wassertemperaturerhöhung) und 12 Stunden in der anderen Richtung (z. B. Wassertemperatursenkung). Wenn die Konzentration der organischen Substanzen im Wasser des Tanks mit Wasserorganismen 14 (Fig. 1) 80 % der Konzentration der organischen Substanzen vor der Veränderung der Wassertemperatur im Tank mit Wasserorganismen 14 (Fig. 1) erreichte, gab der Rechner 2 (Fig. 1) Befehle vom vierten Daten-Schaltausgang an den Daten-Schalteingang der zweiten Pumpe 22 (Fig. 1) und an den Daten-Schalteingang der Frischwasserzugabe-Einheit 21 (Fig. 1), dass sie in den Normalbetrieb zurückgehen mussten. Danach lief der Prozess der Verkaufsvorbereitung (Waschen) der Wasserorganismen ab, bis die Konzentration der organischen Substanzen im Wasser des Tanks mit Wasserorganismen 14 (Fig. 1) max. 0,005 µg/l erreichte.

Die Schaffung der Bedingungen für die beschleunigte Entfernung der organischen Substanzen (wie z. B. Geosmin und 2-Methylisoborneol) aus dem Gewebe von Wasserorganismen, wobei die Tendenz zur Erhöhung der Konzentration dieser organischen Substanzen im Waschwasser während der Behandlung beseitigt wird, trägt dazu bei, dass dieser Prozess schnell und erfolgreich abgeschlossen wird. Das wird durch Vergleichsversuche bestätigt, bei denen auch die Prototypvorrichtung eingesetzt worden ist. Die Versuchsergebnisse sind der Tabelle 7 entnehmbar.

**Tabelle 7**

| Pos. | Bezeichnung | Konzentration Geosmin/2-Methylisoborneol im Wasser des Tanks zur Verkaufsvorbereitung von Wasserorganismen, µg/l | | | | | | |
|---|---|---|---|---|---|---|---|---|
| 1 | Tage des Waschens | 1 | 5 | 10 | 15 | 20 | 25 | 30 |
| 2 | Beanspruchte Anlage | 0,028 | 0,014 | 0,008 | **0,005** | - | - | - |
| | | 0,015 | 0,09 | 0,007 | **0,006** | - | - | - |
| | | | | | | | | |
| 3 | Prototypvorrichtung | 0,025 | 0,022 | 0,019 | 0,016 | 0,013 | 0,01 | **0,007** |
| | | 0,021 | 0,019 | 0,017 | 0,015 | 0,013 | 0,011 | **0,009** |

Aus den Ergebnissen der Vergleichsversuche unter Einsatz der Prototypvorrichtung gemäß Tabelle 7 geht hervor, dass die beanspruchte Anlage den angemeldeten technischen Effekt sicher gewährleistet.

### Beispiel 2

Der Tank für Wasserorganismen 14 (Fig. 1) wurde mit 10.000 kg Forellen gefüllt. Die Wassertemperatur im Tank betrug 15° C. Der Wasserinhalt in diesem Tank betrug 200 m³. Der Tagesumfang des zugeführten Frischwassers betrug 60 m³. Die Leistung der zweiten Pumpe 22 (Fig. 1), die das Wasser aus dem Tank mit Wasserorganismen 14 (Fig. 1) (in diesem Beispiel mit Forellen) zum Eingang des Aktivkohlefilters 23 (Fig. 1) förderte, lag bei 40 m³/h. Die Leistung der ersten Pumpe 15 (Fig. 1), die das Wasser zum Eingang des zeolithischen Filters 13 (Fig. 1) förderte, betrug 180 m³/h. Während der Verkaufsvorbereitung (Waschen) wurden die Forellen einem Stress ausgesetzt: Am fünften Tag des Waschens wurde die Wassertemperatur um 4° C (bis auf 19° C) innerhalb von 12 Stunden erhöht und anschließend innerhalb von 12 Stunden von 19° C auf 15° C herabgesetzt. Während der Verkaufsvorbereitung der Forellen wurde der zeolithische Filter dreimal aufgefrischt und zweimal gewaschen.

Das Druckniveau im zeolithischen Filter 13 (Fig. 1) in der beanspruchten Wasseraufbereitungsanlage zur Verkaufsvorbereitung von Wasserorganismen betrug unter 2,2 bar. Die Ammoniakstickstoff-Konzentration im Wasser mit Wasserorganismen 14 (Fig. 1) lag unter 0,9 mg/l. Die Konzentration der organischen Substanzen in der Konzentrationsmesseinheit für organische Substanzen 24 (Fig. 1) veränderte sich innerhalb einer stündlichen Messungsiteration um max. 10 % nach oben. Das Druckniveau im Aktivkohlefilter 23 (Fig. 1) war niedriger als 2,2 bar. Die Ammoniakstickstoff-Konzentration im Wasser des Waschwassertanks 1 (Fig. 1) lag unter 1,2 mg/l. Die NaCl-Konzentration im Wasser des Waschwassertanks 1 (Fig. 1) war höher als 50 g/l. Der pH-Wert im Wasser des Waschwassertanks 1 (Fig. 1) war über 11.

Dabei wurden folgende Befehle vom vierten Daten-Schaltausgang des Rechners 2 (Fig. 1) abgegeben:
- an den Daten-Schalteingang des ersten Luftverdichters 5 (Fig. 1) für dessen Normalbetrieb;
- an den Daten-Schalteingang des vierten Verschlusses 11 (Fig. 1) für dessen Öffnung;
- an den Daten-Schalteingang des dritten Verschlusses 10 (Fig. 1) für dessen Schließen;
- an den Daten-Schalteingang des fünften Verschlusses 12 (Fig. 1) für dessen Schließen;
- an den Daten-Schalteingang des siebenten Verschlusses 17 (Fig. 1) für dessen Schließen;
- an den Daten-Schalteingang des sechsten Verschlusses 16 (Fig. 1) für dessen Schließen;
- an den Daten-Schalteingang des ersten Verschlusses 8 (Fig. 1) für dessen Öffnung;
- an den Daten-Schalteingang des Boilers 19 (Fig. 1) für dessen Normalbetrieb;
- an den Daten-Schalteingang des zweiten Verschlusses 9 (Fig. 1) für dessen Öffnung;
- an den Daten-Schalteingang der ersten Pumpe 15 (Fig. 1) für deren Einschalten;
- an den Daten-Schalteingang der zweiten Pumpe 22 (Fig. 1) für deren Normalbetrieb;
- an den Daten-Schalteingang der UV-Bestrahlungseinheit 20 (Fig. 1) für deren Einschalten;
- an den Daten-Schalteingang des zweiten Luftverdichters 18 (Fig. 1) für dessen Einschalten;
- an den Daten-Schalteingang der Frischwasserzugabe-Einheit 21 (Fig. 1) für deren Normalbetrieb.
Vom fünften Daten-Schaltausgang des Rechners 2 (Fig. 1) kam der Befehl an den Daten-Schalteingang der Sedimentversetzungseinheit 6 (Fig. 1) für deren Abschalten. Vom dritten Daten-Schaltausgang des Rechners 2 (Fig. 1) kam der Befehl an den Daten-Schalteingang der NaCl-Konzentrations-Regeleinheit 3 im Wasser (Fig. 1) für deren Abschalten. Vom zweiten Daten-Schaltausgang des Rechners 2 (Fig. 1) kam der Befehl an den Daten-Schalteingang der pH-Konzentrations-Regeleinheit 4 im Wasser (Fig. 1) für deren Abschalten.

Die Anlage gemäß der Erfindung funktionierte in dieser Betriebsart wie folgt.
Das Waschwasser kommt vom zweiten Ausgang des Tanks mit Wasserorganismen 14 (Fig. 1) über den offenen Eingang des vierten Verschlusses 11 (Fig. 1) und danach über dessen Ausgang zum zweiten Eingang der ersten Pumpe 15 (Fig. 1). Von ihrem zweiten Ausgang wird dieses Wasser zum offenen Eingang des ersten Verschlusses 8 (Fig. 1) gefördert. Vom Ausgang des ersten Verschlusses 8 (Fig. 1) wird das Wasser dem Eingang des Boilers 19 (Fig. 1) zugeführt. Hier wird es bis zur Soll-Temperatur erwärmt. Vom Ausgang des Boilers 19 (Fig. 1) wird das bis zur Soll-Temperatur erwärmte Wasser an den ersten Eingang des zeolithischen Filters 13 (Fig. 1) gefördert. Das darin von Ammoniakstickstoff gereinigte Wasser fließt vom ersten Ausgang des zeolithischen Filters 13 (Fig. 1) an den Eingang der UV-Bestrahlungseinheit 20 (Fig. 1). Hier wird es desinfiziert. Vom Ausgang der UV-Bestrahlungseinheit 20 (Fig. 1) wird dieses Wasser dem offenen Eingang des zweiten Verschlusses 9 (Fig. 1) zugeführt. Dann fließt es von dessen Ausgang an den ersten Eingang des Tanks mit Wasserorganismen 14 (Fig. 1). Vom dritten Ausgang des Tanks mit Wasserorganismen 14 (Fig. 1) wird ein Teil des Wassers über den Eingang der zweiten Pumpe 22 (Fig. 1) und dann über deren Ausgang dem Eingang des Aktivkohlefilters 23 (Fig. 1) geführt. Das auf diese Weise von organischen Substanzen gereinigte Wasser fließt vom Ausgang des Aktivkohlefilters 23 (Fig. 1) an den zweiten Eingang des Tanks mit Wasserorganismen 14 (Fig. 1). Die Anlage gemäß der Erfindung wird unter ständiger Überwachung der oben genannten Kenndaten durch den Rechner 2 (Fig. 1) 2 Tage lang betrieben. Am dritten Betriebstag kommt der Befehl für die Wassererwärmung um 4° C im Tank mit Wasserorganismen 14 (Fig. 1) vom vierten Daten-Schaltausgang des Rechners 2 (Fig. 1) an den Eingang des Boilers 19 (Fig. 1). Dabei kommt das Wasser aus dem vierten Ausgang des Tanks mit Wasserorganismen 14 (in diesem Beispiel Forellen) (Fig. 1) in die Konzentrationsmesseinheit für organische Substanzen 24 (Fig. 1). Hier wird die Konzentration der darin enthaltenen organischen Substanzen ausgewertet. Die Daten über die Konzentrationsänderung der organischen Substanzen im Tank mit Wasserorganismen 14 (Fig. 1) kommen vom Daten-Schaltausgang der Konzentrationsmesseinheit für organische Substanzen 24 (Fig. 1) an den fünften Daten-Schalteingang des Rechners 2 (Fig. 1). Der Rechner 2 (Fig. 1) gibt den Befehl von seinem vierten Daten-Schaltausgang an den Daten-Schalteingang der zweiten Pumpe 22 (Fig. 1) ab, um deren Leistung zu erhöhen, sowie an den Daten-Schalteingang der Frischwasserzugabe-Einheit 21 (Fig. 1), um den Umfang des geförderten Wassers in den Tank für Wasserorganismen 14 (Fig. 1) über dessen vierten Eingang zu vergrößern. Dabei dürfen die Messdaten der stundenweisen Konzentrationsmessung der organischen Substanzen im Wasser des Tanks mit Wasserorganismen den Grenzwert von 10% nach oben der Konzentration von organischen Substanzen nicht überschreiten, die dem Anfang der Wassertemperatursteigerung im Tank mit Wasserorganismen 14 (Fig. 1) vorausging. Der Prozess der Wassertemperatursteigerung im Tank mit Wasserorganismen 14 (Fig. 1) dauert je 12 Stunden. Der umgekehrte Prozess (Senkung der Wassertemperatur im Tank mit Wasserorganismen 14 (Fig. 1) dauert ebenfalls 12 Stunden. Wird eine Konzentration der organischen Substanzen im Wasser des Tanks mit Wasserorganismen 14 (Fig. 1) von 80 % gegenüber der Konzentration von organischen Substanzen vor der thermischen Einwirkung auf die Wasserorganismen (in diesem Beispiel Forellen) erreicht, so gibt der Rechner 2 (Fig. 1) den Befehl für die Umstellung auf den Normalbetrieb vom vierten Daten-Schaltausgang an den Daten-Schalteingang der zweiten Pumpe 22 (Fig. 1) und gleichzeitig an den Daten-Schalteingang der Frischwasserzugabe-Einheit 21 (Fig. 1) ab. Danach läuft der Prozess der Verkaufsvorbereitung (Waschen) der Wasserorganismen ab, bis die Konzentration von max. 0,005 µg/l der organischen Substanzen im Wasser des Tanks mit Wasserorganismen 14 (Fig. 1) erreicht ist.

Die Schaffung der Bedingungen für die beschleunigte Entfernung der organischen Substanzen (wie z. B. Geosmin und 2-Methylisoborneol) aus dem Gewebe von Wasserorganismen, wobei die Tendenz zur Erhöhung der Konzentration dieser organischen Substanzen im Waschwasser während des Waschens beseitigt wird, trägt dazu bei, dass dieser Prozess schnell und erfolgreich abgeschlossen wird. Das wird durch Vergleichsversuche bestätigt, bei denen auch die Prototypvorrichtung eingesetzt worden ist. Die Versuchsergebnisse sind der Tabelle 8 entnehmbar.

**Tabelle 8**

| Pos. | Bezeichnung | Konzentration Geosmin/2-Methylisoborneol im Wasser im Waschtank für Wasserorganismen, µg/l | | | | | | |
|---|---|---|---|---|---|---|---|---|
| 1 | Tage des Waschens | 1 | 5 | 10 | 15 | 20 | 25 | 30 |
| 2 | Beanspruchte Anlage | 0,038 | 0,034 | 0,018 | 0,006 | **0,005** | - | - |
| | | 0,021 | 0,019 | 0,009 | 0,007 | **0,005** | - | - |
| | | | | | | | | |
| 3 | Prototypvorrichtung | 0,041 | 0,037 | 0,033 | 0,029 | 0,024 | 0,020 | **0,015** |
| | | 0,019 | 0,017 | 0,015 | 0,013 | 0,011 | 0,009 | **0,007** |

Aus den Ergebnissen der Vergleichsversuche unter Einsatz der Prototypvorrichtung gemäß der Tabelle 8 geht hervor, dass die Anlage gemäß der Erfindung den angemeldeten technischen Effekt sicher gewährleistet.

### Beispiel 3

Der Tank für Wasserorganismen 14 (Fig. 1) wurde mit 9.800 kg Waxdick gefüllt. Die Wassertemperatur in diesem Tank betrug 25° C. Der Wasserinhalt im Tank betrug 180 m³. Der Tagesumfang des zugeführten Frischwassers erreichte 50 m³. Die Leistung der zweiten Pumpe 22 (Fig. 1) bei der Förderung des Wassers aus dem Tank mit Wasserorganismen 14 (Fig. 1) (in diesem Beispiel Waxdick) zum Eingang des Aktivkohlefilters betrug 50 m³/h. Die Pumpenleistung bei der Förderung des Wassers zum Eingang des zeolithischen Filters 23 (Fig. 1) betrug 200 m³/h. Während der Verkaufsvorbereitung (Waschen) wurde Waxdick dem Stress ausgesetzt: Am vierten Tag des Waschens wurde die Wassertemperatur um 4° C (bis auf 29° C) innerhalb von 12 Stunden erhöht und anschließend um 4° C innerhalb von 12 Stunden (d. h. von 29° C auf 25° C) herabgesetzt. Während der Verkaufsvorbereitung von Waxdick wurde der zeolithische Filter dreimal aufgefrischt und dreimal gewaschen.

Das Druckniveau im zeolithischen Filter 13 (Fig. 1) in der beanspruchten Wasseraufbereitungsanlage zur Verkaufsvorbereitung von Wasserorganismen lag unter 2,2 bar. Die Ammoniakstickstoff-Konzentration im Wasser des Tanks mit Wasserorganismen 14 (Fig. 1) lag unter 0,9 mg/l. Die Konzentration der organischen Substanzen in der Konzentrationsmesseinheit für organische Substanzen 24 (Fig. 1) veränderte sich innerhalb einer stündlichen Messungsiteration um max. 10 % nach oben. Das Druckniveau im Aktivkohlefilter 23 (Fig. 1) betrug unter 2,2 bar. Die Ammoniakstickstoff-Konzentration im Wasser des Waschwassertanks 1 (Fig. 1) lag unter 1,2 mg/l. Die NaCl-Konzentration im Wasser des Waschwassertanks 1 (Fig. 1) betrug über 50 g/l. Der pH-Wert im Wasser des Waschwassertanks 1 (Fig. 1) war höher als 11.

Dabei werden folgende Befehle von den Daten-Schaltausgängen des Rechners 2 (Fig. 1) abgegeben:
- vom vierten Daten-Schaltausgang des Rechners 2 (Fig. 1) kommt der Befehl an den Daten-Schalteingang des ersten Luftverdichters 5 (Fig. 1) für dessen Normalbetrieb;
- vom vierten Daten-Schaltausgang des Rechners 2 (Fig. 1) kommt der Befehl an den Daten-Schalteingang des vierten Verschlusses 11 (Fig. 1) für dessen Öffnung;
- vom vierten Daten-Schaltausgang des Rechners 2 (Fig. 1) kommt der Befehl an den Daten-Schalteingang des dritten Verschlusses 10 (Fig. 1) für dessen Schließen;
- vom vierten Daten-Schaltausgang des Rechners 2 (Fig. 1) kommt der Befehl an den Daten-Schalteingang des fünften Verschlusses 12 (Fig. 1) für dessen Schließen;
- vom vierten Daten-Schaltausgang des Rechners 2 (Fig. 1) kommt der Befehl an den Daten-Schalteingang des siebenten Verschlusses 17 (Fig. 1) für dessen Schließen;
- vom vierten Daten-Schaltausgang des Rechners 2 (Fig. 1) kommt der Befehl an den Daten-Schalteingang des sechsten Verschlusses 16 (Fig. 1) für dessen Schließen;
- vom vierten Daten-Schaltausgang des Rechners 2 (Fig. 1) kommt der Befehl an den Daten-Schalteingang des ersten Verschlusses 8 (Fig. 1) für dessen Öffnung;
- vom vierten Daten-Schaltausgang des Rechners 2 (Fig. 1) kommt der Befehl an den Daten-Schalteingang des Boilers 19 (Fig. 1) für dessen Normalbetrieb;
- vom vierten Daten-Schaltausgang des Rechners 2 (Fig. 1) kommt der Befehl an den Daten-Schalteingang des zweiten Verschlusses 9 (Fig. 1) für dessen Öffnung;
- vom vierten Daten-Schaltausgang des Rechners 2 (Fig. 1) kommt der Befehl an den Daten-Schalteingang der ersten Pumpe 15 (Fig. 1) für deren Einschalten;
- vom vierten Daten-Schaltausgang des Rechners 2 (Fig. 1) kommt der Befehl an den Daten-Schalteingang der zweiten Pumpe 22 (Fig. 1) für deren Normalbetrieb;
- vom vierten Daten-Schaltausgang des Rechners 2 (Fig. 1) kommt der Befehl an den Daten-Schalteingang der UV-Bestrahlungseinheit 20 (Fig. 1) für deren Einschalten;
- vom vierten Daten-Schaltausgang des Rechners 2 (Fig. 1) kommt der Befehl an den Daten-Schalteingang des zweiten Luftverdichters 18 (Fig. 1) für dessen Einschalten;
- vom vierten Daten-Schaltausgang des Rechners 2 (Fig. 1) kommt der Befehl an den Daten-Schalteingang der Frischwasserzugabe-Einheit 21 (Fig. 1) für deren Normalbetrieb;
- vom fünften Daten-Schaltausgang des Rechners 2 (Fig. 1) kommt der Befehl an den Daten-Schalteingang der Sedimentversetzungseinheit 6 (Fig. 1) für deren Abschalten;
- vom dritten Daten-Schaltausgang des Rechners 2 (Fig. 1) kommt der Befehl an den Daten-Schalteingang der NaCl-Konzentrations-Regeleinheit 3 im Wasser (Fig. 1) für deren Abschalten;
- vom zweiten Daten-Schaltausgang des Rechners 2 (Fig. 1) kommt der Befehl an den Daten-Schalteingang der pH-Konzentrations-Regeleinheit 4 im Wasser (Fig. 1) für deren Abschalten.

Die Anlage gemäß der Erfindung funktioniert in dieser Betriebsart wie folgt.
Das Waschwasser kommt vom zweiten Ausgang des Tanks mit Wasserorganismen 14 (Fig. 1) über den offenen Eingang des vierten Verschlusses 11 (Fig. 1) und danach über dessen Ausgang an den zweiten Eingang der ersten Pumpe 15 (Fig. 1). Vom zweiten Ausgang dieser Pumpe wird das Wasser dem offenen Eingang des ersten Verschlusses 8 (Fig. 1) zugeführt. Von dessen Ausgang fließt es zum Eingang des Boilers 19 (Fig. 1). Hier wird es bis zur Soll-Temperatur erwärmt. Vom Ausgang des Boilers 19 (Fig. 1) kommt das im Boiler 19 (Fig. 1) erwärmte Wasser an den ersten Eingang des zeolithischen Filters 13 (Fig. 1). Das von Ammoniakstickstoff gereinigte Wasser kommt vom ersten Ausgang des zeolithischen Filters 13 (Fig. 1) an den Eingang der UV-Bestrahlungseinheit 20 (Fig. 1). Hier wird es desinfiziert. Vom Ausgang der UV-Bestrahlungseinheit 20 (Fig. 1) wird das desinfizierte Wasser an den offenen Eingang des zweiten Verschlusses 9 (Fig. 1) geleitet. Von dessen Ausgang fließt es an den ersten Eingang des Tanks mit Wasserorganismen 14 (Fig. 1). Vom dritten Ausgang des Tanks mit Wasserorganismen 14 (Fig. 1) kommt ein Teil des Wassers über den Eingang der zweiten Pumpe 22 (Fig. 1) und danach über ihren Ausgang an den Eingang des Aktivkohlefilters 23 (Fig. 1). Das von organischen Substanzen gereinigte Wasser kommt vom Ausgang des Aktivkohlefilters 23 (Fig. 1) an den zweiten Eingang des Tanks mit Wasserorganismen 14 (Fig. 1). Die beanspruchte Vorrichtung wird unter ständiger Überwachung der Kenndaten durch den Rechner 2 (Fig. 1) 2 Tage lang betrieben. Am dritten Betriebstag kommt der Befehl für die Wasserkühlung um 4° C im Tank mit Wasserorganismen 14 (Fig. 1) vom vierten Daten-Schaltausgang des Rechners 2 (Fig. 1) an den Daten-Schalteingang des Boilers 19 (Fig. 1).

Die Daten über die Konzentrationsänderung der organischen Substanzen im Wasser (die ständige Probeentnahme durch die Konzentrationsmesseinheit für organische Substanzen 24 (Fig. 1)) erfolgt über den vierten Ausgang des Tanks mit Wasserorganismen 14 (Fig. 1) vom Daten-Schaltausgang der Konzentrationsmesseinheit für organische Substanzen 24 (Fig. 1) an den fünften Daten-Schalteingang des Rechners 2 (Fig. 1). Der Rechner 2 (Fig. 1) sendet den Befehl vom vierten Daten-Schaltausgang an den Daten-Schalteingang der zweiten Pumpe (22), um deren Leistung zu erhöhen, und zugleich an den Daten-Schalteingang der Frischwasserzugabe-Einheit 21 (Fig. 1), um den Umfang der Frischwasserspeisung im Tank für Wasserorganismen 14 (Fig. 1) zu vergrößern. Dabei dürfen die Messdaten der stundenweisen Konzentrationsmessung der organischen Substanzen im Wasser des Tanks mit Wasserorganismen den Grenzwert von 10 % nach oben der Konzentration von organischen Substanzen nicht überschreiten, die dem Anfang der Wassertemperatursenkung im Tank mit Wasserorganismen 14 (Fig. 1) vorausging.

Der Prozess der Wassertemperatursteigerung (oder Senkung) im Tank mit Wasserorganismen 14 (Fig. 1) dauert je 12 Stunden hin und zurück, d. h. 12 Stunden Temperaturerhöhung und 12 Stunden Temperatursenkung.

Wird die Konzentration der organischen Substanzen im Wasser des Tanks mit Wasserorganismen 14 (Fig. 1) von 80 % gegenüber der Konzentration von organischen Substanzen vor der thermischen Einwirkung auf die Wasserorganismen mittels zyklischer Wassertemperaturschwankungen erreicht, so gibt der Rechner 2 (Fig. 1) Befehle für die Umstellung der zweiten Pumpe 22 und der Frischwasserzugabe-Einheit 21 auf den Normalbetrieb von seinem vierten Daten-Schaltausgang an den Daten-Schalteingang der zweiten Pumpe 22 (Fig. 1) und an den Daten-Schalteingang der Frischwasserzugabe-Einheit 21 (Fig. 1) ab.

Danach läuft der Prozess der Verkaufsvorbereitung (Waschen) der Wasserorganismen ab, bis die Konzentration von max. 0,005 µg/l der organischen Substanzen im Wasser des Tanks mit Wasserorganismen 14 (Fig. 1) erreicht ist.

Die Schaffung der Bedingungen für die beschleunigte Entfernung der organischen Substanzen (wie z. B. Geosmin und 2-Methylisoborneol) aus dem Gewebe von Wasserorganismen, wobei die Tendenz zur Erhöhung der Konzentration dieser organischen Substanzen im Waschwasser während des Waschens beseitigt wird, trägt dazu bei, dass dieser Prozess schnell und erfolgreich abgeschlossen wird. Das wird durch Vergleichsversuche bestätigt, bei denen auch die Prototypvorrichtung eingesetzt worden ist. Die Versuchsergebnisse sind der Tabelle 9 entnehmbar.

**Tabelle 9**

| Pos. | Bezeichnung | Konzentration Geosmin/2-Methylisoborneol im Wasser im Waschtank für Wasserorganismen, µg/l | | | | | | |
|---|---|---|---|---|---|---|---|---|
| 1 | Tage des Waschens | 1 | 5 | 10 | 15 | 20 | 25 | 30 |
| 2 | Beanspruchte Anlage | 0,052 | 0,031 | 0,012 | **0,005** | - | - | - |
| | | 0,034 | 0,024 | 0,011 | **0,006** | - | - | - |
| | | | | | | | | |
| 3 | Prototypvorrichtung | 0,037 | 0,033 | 0,029 | 0,025 | 0,020 | 0,015 | **0,010** |
| | | 0,022 | 0,02 | 0,018 | 0,016 | 0,013 | 0,01 | **0,006** |

Aus den Ergebnissen der Vergleichsversuche unter Einsatz der Prototypvorrichtung gemäß der Tabelle 9 geht hervor, dass die beanspruchte Anlage den angemeldeten technischen Effekt sicher gewährleistet.

Für die Umsetzung der Anlage gemäß der Erfindung können bekannte Materialien, Baugruppen und Vorrichtungen eingesetzt werden.

### Liste der Bezugszeichen:

- 1: Waschwassertank
- 2: Rechner
- 3: NaCl-Konzentrations-Regeleinheit im Wasser
- 4: Wasser-pH-Konzentrations-Regeleinheit
- 5: erster Luftverdichter
- 6: Sedimentversetzungseinheit
- 7: Sedimentabführungseinheit
- 8: erster Verschluss
- 9: zweiter Verschluss
- 10: dritter Verschluss
- 11: vierter Verschluss
- 12: fünfter Verschluss
- 13: zeolithischer Filter
- 14: Tank für Wasserorganismen
- 15: erste Pumpe
- 16: sechster Verschluss
- 17: siebenter Verschluss
- 18: zweiter Luftverdichter
- 19: Boiler
- 20: UV-Bestrahlungseinheit
- 21: Frischwasserzugabe-Einheit
- 22: zweite Pumpe
- 23: Aktivkohlefilter
- 24: Konzentrationsmesseinheit für organische Substanzen

## Patentansprüche

1. Wasseraufbereitungsanlage zur Verkaufsvorbereitung von Wasserorganismen enthält
- einen Waschwassertank (1), der
- mit einem ersten, einem zweiten, einem dritten und einem vierten Eingang,
- mit einem ersten, einem zweiten, einem dritten, einem vierten und einem fünften Ausgang,
- mit einem Daten-Schalteingang und einem Daten-Schaltausgang versehen ist,
- einen Rechner (2), der
- mit einem ersten, einem zweiten, einem dritten, einem vierten und einem fünften Daten-Schalteingang und
- mit einem ersten, einem zweiten, einem dritten, einem vierten und einem fünften Daten-Schaltausgang
versehen ist,
- eine NaCl-Konzentrations-Regeleinheit (3) im Wasser, die mit einem Eingang, einem Ausgang, einem Daten-Schalteingang und einem Daten-Schaltausgang versehen ist,
- eine Wasser-pH-Konzentrations-Regeleinheit (4), die mit einem Eingang, einem Ausgang, einem Daten-Schalteingang und einem Daten-Schaltausgang versehen ist,
- einen ersten Luftverdichter (5), der mit einem Ausgang und einem Daten-Schalteingang versehen ist,
- eine Sedimentversetzungseinheit (6), die einen Eingang, einen Ausgang und einen Daten-Schalteingang aufweist,
- eine Sedimentabführungseinheit (7), die einen ersten, einen zweiten, einen dritten und einen vierten Eingang aufweist,
- einen ersten Verschluss (8), der mit einem Eingang, einem Ausgang und einem Daten-Schalteingang versehen ist,
- einen zweiten Verschluss (9), der mit einem Eingang, einem Ausgang und einem Daten-Schalteingang versehen ist,
- einen dritten Verschluss (10), der mit einem Eingang, einem Ausgang und einem Daten-Schalteingang versehen ist,
- einen vierten Verschluss (11), der mit einem Eingang, einem Ausgang und einem Daten-Schalteingang versehen ist,
- einen fünften Verschluss (12), der mit einem Eingang, einem Ausgang und einem Daten-Schalteingang versehen ist,
- einen zeolithischen Filter (13), der
- einen ersten und einen zweiten Eingang,
- einen ersten und einen zweiten Ausgang und
- einen Daten-Schaltausgang aufweist,
- einen Tank für Wasserorganismen (14), der
- einen ersten, einen zweiten, einen dritten und einen vierten Eingang,
- einen ersten, einen zweiten, einen dritten und einen vierten Ausgang und
- einen Daten-Schaltausgang aufweist,
- eine erste Pumpe (15), die
- mit einem ersten und einem zweiten Eingang,
- mit einem ersten und einem zweiten Ausgang und
- einem Daten-Schalteingang versehen ist,
- einen sechsten Verschluss (16), der mit einem Eingang, einem Ausgang und einem Daten-Schalteingang versehen ist,
- einen zweiten Luftverdichter (18), der mit einem Ausgang und einem Daten-Schalteingang versehen ist,
- einen Boiler (19), der mit einem Eingang, einem Ausgang und einem Daten-Schalteingang versehen ist,
- eine UV-Bestrahlungseinheit (20), die mit einem Eingang, einem Ausgang und einem Daten-Schalteingang versehen ist,
- eine Frischwasserzugabe-Einheit (21), die mit einem Ausgang und einem Daten-Schalteingang versehen ist,
- eine zweite Pumpe (22), die mit einem Eingang, einem Ausgang und einem Daten-Schalteingang versehen ist,
- einen Aktivkohlefilter (23), der mit einem Eingang, einem Ausgang und einem Daten-Schaltausgang versehen ist,
- eine Konzentrationsmesseinheit für organische Substanzen (24), die einen Eingang und einen Daten-Schaltausgang aufweist,
wobei der erste Eingang des Waschwassertanks (1) mit dem Ausgang des ersten Luftverdichters (5) verbunden ist, der zweite Eingang des Waschwasser-tanks (1) mit dem Ausgang des fünften Verschlusses (12) verbunden ist, der dritte Eingang des Waschwassertanks (1) mit dem Ausgang der NaCl-Konzentrations-Regeleinheit (3) im Wasser verbunden ist, der vierte Eingang des Waschwassertanks (1) mit dem Ausgang der Wasser-pH-Regeleinheit (4) verbunden ist, der erste Ausgang des Waschwassertanks (1) mit dem Eingang der Wasser-pH-Konzentrations-Regeleinheit (4) verbunden ist, der zweite Ausgang des Waschwassertanks (1) mit dem Eingang des ersten Verschlusses (10) verbunden ist, der dritte Ausgang des Waschwassertanks (1) mit dem Eingang der Sedimentversetzungseinheit (6) verbunden ist, der vierte Ausgang des Waschwassertanks (1) mit dem ersten Eingang der Sedimentabführungseinheit (7) verbunden ist, der fünfte Ausgang des Waschwassertanks (1) mit dem Eingang der NaCl-Konzentrations-Regeleinheit (3) im Wasser verbunden ist, der Daten-Schalteingang des Waschwassertanks (1) mit dem ersten Daten-Schaltausgang des Rechners (2) verbunden ist, der Daten-Schaltausgang des Waschwassertanks (1) mit dem ersten Daten-Schalteingang des Rechners (2) verbunden ist, der zweite Daten-Schaltausgang des Rechners (2) mit dem Daten-Schalteingang der Wasser-pH-Konzentrations-Regeleinheit (4) verbunden ist, der Daten-Schaltausgang der Wasser-pH-Konzentrations-Regeleinheit (4) mit dem zweiten Daten-Schalteingang des Rechners (2) verbunden ist, der dritte Daten-Schaltausgang des Rechners (2) mit dem Daten-Schalteingang der NaCl-Konzentrations-Regeleinheit (3) im Wasser verbunden ist, der dritte Daten-Schalteingang des Rechners (2) mit einem Daten-Schaltausgang der NaCl-Konzentrations-Regeleinheit (3) im Wasser verbunden ist,
der vierte Daten-Schaltausgang des Rechners (2) mit dem Daten-Schalteingang des ersten Luftverdichters (5), mit dem Daten-Schalteingang des ersten Verschlusses (8), mit dem Daten-Schalteingang des zweiten Verschlusses (9), mit dem Daten-Schalteingang des dritten Verschlusses (10), mit dem Daten-Schalteingang des vierten Verschlusses (11), mit dem Daten-Schalteingang des fünften Verschlusses (12), mit dem Daten-Schalteingang des siebenten Verschlusses (17), mit dem Daten-Schalteingang der Frischwasserzugabe-Einheit (21), mit dem Daten-Schalteingang des zweiten Luftverdichters (18), mit dem Daten-Schalteingang der ersten Pumpe (15), mit dem Daten-Schalteingang des sechsten Verschlusses (16), mit dem Daten-Schalteingang der zweiten Pumpe (22), mit dem Daten-Schalteingang der UV-Bestrahlungseinheit (20), mit dem Daten-Schalteingang des Boilers (19) verbunden ist,
der fünfte Daten-Schaltausgang des Rechners (2) mit dem Daten-Schalteingang der Sedimentversetzungseinheit (6) verbunden ist, der Daten-Schaltausgang des Aktivkohlefilters (23) mit dem vierten Daten-Schalteingang des Rechners (2) verbunden ist, der Daten-Schaltausgang des Tanks für Wasserorganismen (14) und der Daten-Schaltausgang der Konzentrationsmesseinheit für organische Substanzen (24) mit dem fünften Daten-Schalteingang des Rechners (2) verbunden sind, der zweite Eingang der Sedimentabführungseinheit (7) mit dem ersten Ausgang des Tanks für Wasserorganismen (14) verbunden ist, der zweite Ausgang des Tanks für Wasserorganismen (14) mit dem Eingang des vierten Verschlusses (11) verbunden ist, der dritte Ausgang des Tanks für Wasserorganismen (14) mit der zweiten Pumpe (22) verbunden ist, der vierte Ausgang des Tanks für Wasserorganismen (14) mit dem Eingang der Konzentrationsmesseinheit für organische Substanzen (24) verbunden ist, der Ausgang des Boilers (19) mit dem ersten Eingang des zeolithischen Filter (13) verbunden ist, der Eingang des Boilers (19) mit dem Ausgang des ersten Verschlusses (8) verbunden ist, der erste Ausgang des zeolithischen Filters (13) mit dem Eingang der UV-Bestrahlungseinheit (20) verbunden ist, der zweite Ausgang des zeolithischen Filters (13) mit dem Eingang des fünften Verschlusses (12) und mit dem Eingang des siebenten Verschlusses (17) verbunden ist, der Ausgang des siebenten Verschlusses (17) mit dem dritten Eingang der Sedimentabführungseinheit (7) verbunden ist, der Ausgang der Sedimentversetzungseinheit (6) mit dem vierten Eingang der Sedimentabführungseinheit (7) verbunden ist, der Ausgang des sechsten Verschlusses (16) mit dem zweiten Eingang des zeolithischen Filters (13) verbunden ist, der Ausgang der UV-Bestrahlungseinheit (20) mit dem Eingang des zweiten Verschlusses (9) verbunden ist, der Ausgang des zweiten Verschlusses (9) mit dem ersten Eingang des Tanks für Wasserorganismen (14) verbunden ist, der Ausgang der zweiten Pumpe (22) mit dem Eingang des Aktivkohlefilters (23) verbunden ist, der Ausgang des Aktivkohlefilters (23) mit dem zweiten Eingang des Tanks für Wasserorganismen (14) verbunden ist, der Ausgang des zweiten Luftverdichters (18) mit dem dritten Eingang des Tanks für Wasserorganismen (14) verbunden ist, der Ausgang der Frischwasserzugabe-Einheit (21) mit dem vierten Eingang des Tanks für Wasserorganismen (14) verbunden ist, der Ausgang des dritten Verschlusses (10) mit dem ersten Eingang der ersten Pumpe (15) verbunden ist, der Ausgang des vierten Verschlusses (11) mit dem zweiten Eingang der ersten Pumpe (15) verbunden ist, der erste Ausgang der ersten Pumpe (15) mit dem Eingang des sechsten Verschlusses (16) verbunden ist, der zweite Ausgang der ersten Pumpe (15) mit dem Eingang des ersten Verschlusses (8) verbunden ist und wobei auf dem Rechner (2) die Software "Steuerprogramm zur Wasseraufbereitung im Laufe der Vorverkaufsbehandlung von Wasserorganismen" installiert ist.
